(19) Europäisches Patentamt / European Patent Office / Office européen des brevets

(11) **EP 3 602 948 B1**

(12) **EUROPEAN PATENT SPECIFICATION**

(45) Date of publication and mention
of the grant of the patent:
**04.05.2022 Bulletin 2022/18**

(21) Application number: **18772278.0**

(22) Date of filing: **21.03.2018**

(51) International Patent Classification (IPC):
**H04L 5/00** *(2006.01)* **H04W 56/00** *(2009.01)*
**H04L 27/26** *(2006.01)*

(52) Cooperative Patent Classification (CPC):
**H04L 5/0048; H04L 27/2613; H04L 27/2646;**
H04L 27/2655; H04L 27/2666

(86) International application number:
**PCT/SE2018/050293**

(87) International publication number:
**WO 2018/174799 (27.09.2018 Gazette 2018/39)**

(54) **CHANNEL RASTER AND NUMBERING**

KANALRASTER UND NUMMERIERUNG

TRAME ET NUMÉROTAGE DE CANAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.03.2017 US 201762476380 P**

(43) Date of publication of application:
**05.02.2020 Bulletin 2020/06**

(73) Proprietor: **Telefonaktiebolaget LM Ericsson
(publ)
164 83 Stockholm (SE)**

(72) Inventor: **SKÖLD, Johan
169 72 Solna (SE)**

(74) Representative: **Ericsson
Patent Development
Torshamnsgatan 21-23
164 80 Stockholm (SE)**

(56) References cited:
**US-A1- 2018 131 487**

• **SOFTBANK CORP: "On 200kHz channel raster in NR", 3GPP DRAFT; R4-1702771 NR CHANNEL RASTER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Spokane, US; 20170403 - 20170407 23 March 2017 (2017-03-23), XP051255810, Retrieved from the Internet: URL:http://www.3gpp.org/ftp/tsg_ran/WG4_Ra dio/TSGR4_82Bis/Docs/ [retrieved on 2017-03-23]**
• **ERICSSON: "General NR Sync and Channel raster concept", 3GPP DRAFT; R4-1706640 RASTER CONCEPT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Qingdao, China; 20170627 - 20170629 19 June 2017 (2017-06-19), XP051308653, Retrieved from the Internet: URL:http://www.3gpp.org/ftp/tsg_ran/WG4_Ra dio/TSGR4_AHs/TSGR4_NR_Jun2017/Docs/ [retrieved on 2017-06-19]**
• **SAMSUNG: "Remaining issues of SS frequency raster", 3rd Generation Partnership Project (3GPP, 13 February 2017 (2017-02-13), XP051210046, Athens, Greece [retrieved on 2018-07-05]**

- "NR Channel Arrangement", 3rd Generation Partnership Project (3GPP, 5 July 2018 (2018-07-05), XP051213972, Athens, Greece
- HUAWEI et al.: "Channel raster and synchronization signal locations", 3rd Generation Partnership Project (3GPP, 5 July 2018 (2018-07-05), XP051148901, Lisbon, Portugal
- ERICSSON: "NR channel raster for band above 2.6 GHz", 3rd Generation Partnership Project (3GPP, 9 October 2017 (2017-10-09), XP051345399, Dubrovnik, Croatia [retrieved on 2018-07-05]

**Description**

TECHNICAL FIELD

The present disclosure relates, in general, to wireless communications and, more particularly, to channel raster and numbering.

BACKGROUND

All mobile communication systems have a carrier raster that defines a set of frequencies where radio frequency (RF) carriers can be placed for downlink (DL) and uplink (UL) communication. The set of frequencies has to be limited to some extent since RF carriers have to be contained within the frequency bands where the system is allowed to operate (also referred to as operating bands). There are also a limited number of carriers in each band, in order to facilitate an efficient cell search by wireless devices (e.g., user equipment (UE)).

When a wireless device is to first connect to a network, it does not have knowledge of the frequencies of the DL RF carrier(s) (also called RF channels) transmitted by the network. It performs a cell search by scanning the possible RF carrier positions and tries to identify and synchronize to available DL carriers. Once connected to a network, cell search also has to be performed continuously by the wireless device in order to provide mobility, since it needs to find and identify adjacent candidate cells for handover.

With more possible carrier positions, the time required for cell search increases. For this reason, there has to be a limited number of carrier positions in the carrier raster for a wireless device to perform cell search on.

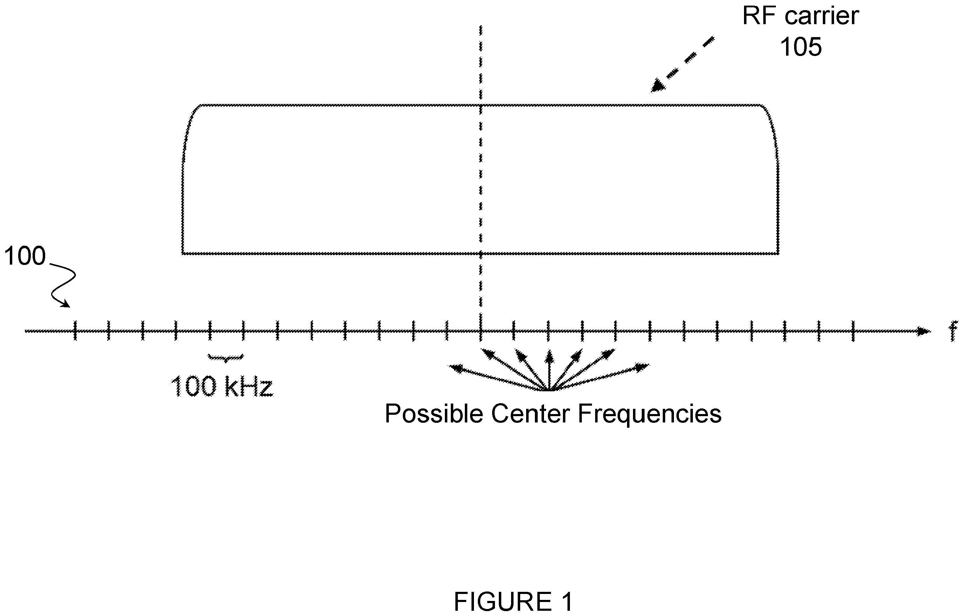

FIGURE 1 illustrates an example carrier raster 100. More particularly, FIGURE 1 illustrates an example carrier raster 100 for an RF carrier 105 in the Long Term Evolution (LTE) mobile system (also known as Evolved Universal Terrestrial Radio Access (E-UTRA)). The LTE mobile system has a carrier raster within each operating band, with a 100 kilohertz (kHz) separation between possible carrier frequency positions (f), as shown in FIGURE 1 (see also 3rd Generation Partnership Project (3GPP) TS 36.101 and TS 36.104). This 100 kHz raster gives a reasonable number of points to search on and, in addition, matches the block assignment of spectrum licenses awarded to operators, which very often has a granularity of 100 kHz.

5G systems, such as the New Radio (NR) Access being developed by 3GPP, will be able to operate in the same frequency bands as LTE, but also in new frequency bands in the millimetre (mm)-wave frequency range. These new bands are considerably larger than existing bands for LTE at lower frequencies and can be up to several gigahertz (GHz) wide. Using an RF carrier grid with, for example, 100 kHz separation could therefore lead to unmanageable cell search times, since there are so many possible raster points.

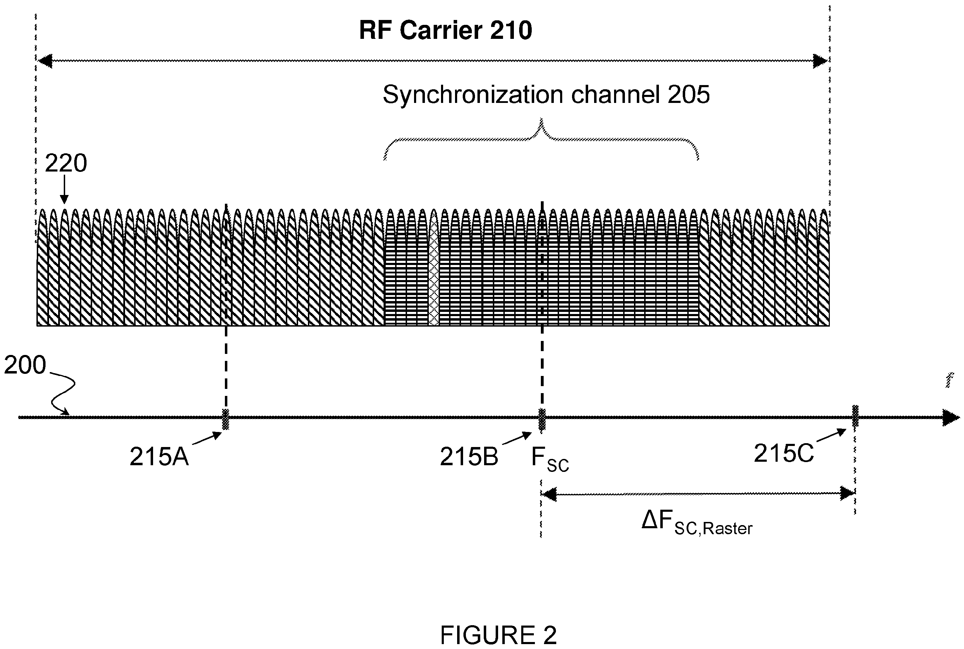

FIGURE 2 illustrates an example synchronization channel frequency and raster. More particularly, FIGURE 2 illustrates a synchronization channel raster 200 for a synchronization channel 205 included in RF carrier 210. Synchronization channel raster 200 includes a plurality of synchronization channel raster points 215A-C. Synchronization channel 205 (and RF carrier 210) are made up of a plurality of subcarriers 220.

NR will be designed to operate with many possible RF channel bandwidths, and also with different possible numerologies (in terms of Orthogonal Frequency Division Multiplexed (OFDM) subcarrier spacing and other parameters). This could further increase the cell search time. It has therefore been proposed in 3GPP (see, for example, 3GPP TSG-RAN WG4 RAN#1-NR, R4-1700187, "Synchronization signal frequency raster considerations," Spokane, U.S.A, January 17th-19th, 2016) to define a fixed set of synchronization channel frequencies (e.g., synchronization channel 205) on a synchronization channel raster (e.g., synchronization raster 200), as shown in FIGURE 2. A wireless device would then only have to search these pre-determined synchronization channel positions, which would have a pre-determined format and OFDM subcarrier spacing.

SAMSUNG: "Remaining issues of SS frequency raster", R1-1702902, 3rd Generation Partnership Project, 13 February 2017, proposes signaling in NR the relative frequency location of synchronization signals from the center frequency.

SOFTBANK CORP: "On 200kHz channel raster in NR",3GPP DRAFT; R4-1702771, RAN WG4, no. Spokane, 23 March 2017, has also recognized that due to the channel raster chosen for NR, the transmission carrier band might not fit into the assigned licensed block to the operator.

Synchronization channel 205 is part of RF channel 210, and thus consists of a number of OFDM subcarriers 220. This means that the grid positions of synchronization channel 205 would be aligned with the subcarriers of the complete RF carrier 210, which gives some restrictions on the possible positions of the complete RF carrier.

The proposed approach, however, suffers from certain deficiencies. For example, when the wireless device has identified a valid synchronization channel (e.g., synchronization channel 205), the wireless device will still not have full knowledge of the position and channel bandwidth of the complete RF carrier 210. The synchronization channel can be in any possible position within RF carrier 210, which can have any of the different RF channel bandwidths allowed in the operating band.

There is also a secondary problem with the proposed scheme, in that the OFDM subcarrier grid is aligned between synchronization channel 205 and the complete RF carrier 210. This will give a granularity in how to position RF carrier 210, which cannot be smaller than the subcarrier spacing. This can cause problems due to regulations imposed through license conditions for an operator of a network (e.g., an NR network). For example, if the license specifies a very strict frequency range (i.e., "licence block") in which the operator can place an RF carrier, it may not be possible to place RF carrier 210 exactly centered in that license block due to the coarse granularity imposed by the subcarrier spacing of NR. This creates a risk that RF emissions "spill" over on one side of the license block, potentially violating the license conditions or other regulation(s) imposed on the operation.

SUMMARY

To address the foregoing problems with existing solutions, disclosed is a method in a wireless device. The method comprises identifying a synchronization channel part of an RF carrier in an operating band. The method comprises obtaining system information for use in determining a position of the RF carrier in the operating band relative to the identified synchronization channel part of the RF carrier. The method comprises determining, based on the obtained system information, the position of the RF carrier in the operating band relative to the identified synchronization channel part of the RF carrier.

In certain embodiments, identifying the synchronization channel part of the RF carrier in the operating band may comprise: determining a plurality of pre-determined synchronization raster points based on a synchronization channel raster associated with the synchronization channel part of the RF carrier, each of the pre-determined synchronization raster points defining a possible location of the synchronization channel part of the RF carrier; and performing a cell search on one or more of the plurality of pre-determined synchronization raster points to identify the synchronization channel part of the RF carrier.

In certain embodiments, obtaining system information may comprise receiving a system information message.

In certain embodiments, the synchronization channel part of the RF carrier may comprise a synchronization signal block comprising a primary synchronization signal (PSS) and a secondary synchronization signal (SSS) transmitted together with a Physical Broadcast Channel (PBCH). In certain embodiments, at least a portion of the system information may be contained in the PBCH.

In certain embodiments, the obtained system information may comprise one or more offset values. In certain embodiments, the one or more offset values may comprise at least a first offset value defining an offset from the synchronization channel part of the RF carrier to a center frequency of the RF carrier. In certain embodiments, the center frequency of the RF carrier may correspond to a carrier raster point of a carrier raster associated with the RF carrier.

In certain embodiments, the method may comprise determining, based on the obtained system information, one or more of: a bandwidth of the RF carrier; and a subcarrier spacing of one or more data channels.

In certain embodiments, the method may comprise establishing a connection with a network node via the RF carrier.

In certain embodiments, the method may comprise receiving an instruction to perform a handover to another RF carrier at another frequency.

In certain embodiments, the position of the RF carrier in the operating band may not be centered within a license block, and the method may comprise receiving a truncated transmission of an OFDM symbol, the truncated transmission may comprise one or more blanked subcarriers on at least one side of the transmission. In certain embodiments, the position of the RF carrier in the operating band may not be centered within a license block, and the method may comprise transmitting a truncated transmission of an OFDM symbol, the truncated transmission may comprise one or more blanked subcarriers on at least one side of the transmission.

Also disclosed is a wireless device. The wireless device comprises a receiver, a transmitter, and processing circuitry coupled to the receiver and the transmitter. The processing circuitry is configured to identify a synchronization channel part of an RF carrier in an operating band. The processing circuitry is configured to obtain system information for use in determining a position of the RF carrier in the operating band relative to the identified synchronization channel part of the RF carrier. The processing circuitry is configured to determine, based on the obtained system information, the position of the RF carrier in the operating band relative to the identified synchronization channel part of the RF carrier.

Also disclosed is a wireless device. The wireless device comprises a receiving module, a communication module, and a determining module coupled to the receiving module and the communication module. The determining module is configured to identify a synchronization channel part of an RF carrier in an operating band. The determining module is configured to obtain system information for use in determining a position of the RF carrier in the operating band relative to the identified synchronization channel part of the RF carrier. The determining module is configured to determine, based on the obtained system information, the position of the RF carrier in the operating band relative to the identified synchronization channel part of the RF carrier.

Also disclosed is a computer program, the computer program comprising instructions configured to perform the above-described method in a wireless device. Also disclosed is a computer program product, the computer program product comprising a non-transitory computer-readable storage medium, the non-transitory computer-readable storage medium comprising a computer program comprising computer-executable instructions which, when executed on a processor, are configured to perform the above-described method in a wireless device.

Also disclosed is a method in a network node. The method comprises determining system information for use by a wireless device to determine a position of an RF carrier in an operating band relative to a synchronization channel part of the RF carrier. The method comprises sending the determined system information to the wireless device.

In certain embodiments, the synchronization channel part of the RF carrier may comprise a synchronization signal block comprising a primary synchronization signal and a secondary synchronization signal transmitted together with a PBCH. In certain embodiments, sending the determined system information to the wireless device may comprise sending at least a portion of the determined system information to the wireless device in the PBCH.

In certain embodiments, the determined system information may comprise one or more offset values. In certain embodiments, the one or more offset values may comprise at least a first offset value defining an offset from the synchronization channel part of the RF carrier to a center frequency of the RF carrier. In certain embodiments, the center frequency of the RF carrier may correspond to a carrier raster point of a carrier raster associated with the RF carrier.

In certain embodiments, the determined system information may comprise one or more of: a bandwidth of the RF carrier; and a subcarrier spacing of one or more data channels.

In certain embodiments, the method may comprise establishing a connection with the wireless device via the RF carrier. In certain embodiments, the method may comprise sending an instruction to the wireless device to perform a handover to another RF carrier at another frequency.

In certain embodiments, the position of the RF carrier in the operating band may not be centered within a license block, and the method may comprise receiving a truncated transmission of an OFDM symbol, the truncated transmission may comprise one or more blanked subcarriers on at least one side of the transmission.

In certain embodiments, the position of the RF carrier in the operating band may not be centered within a license block, and the method may comprise transmitting a truncated transmission of an OFDM symbol, the truncated transmission may comprise one or more blanked subcarriers on at least one side of the transmission.

Also disclosed is a network node. The network node comprises a receiver, a transmitter, and processing circuitry coupled to the receiver and the transmitter. The processing circuitry is configured to determine system information for use by a wireless device to determine a position of an RF carrier in an operating band relative to a synchronization channel part of the RF carrier. The processing circuitry is configured to send, via the transmitter, the determined system information to the wireless device.

Also disclosed is a network node. The network node comprises a receiving module, a communication module, and a determining module. The determining module is configured to determine system information for use by a wireless device to determine a position of an RF carrier in an operating band relative to a synchronization channel part of the RF carrier. The communication module is configured to send, via the transmitter, the determined system information to the wireless device.

Also disclosed is a computer program, the computer program comprising instructions configured to perform the above-described method in a network node. Also disclosed is a computer program product, the computer program product comprising a non-transitory computer-readable storage medium, the non-transitory computer-readable storage medium comprising a computer program comprising computer-executable instructions which, when executed on a processor, are configured to perform the above-described method in a network node.

Certain embodiments of the present disclosure may provide one or more technical advantages. For example, certain embodiments may provide the position of the RF channel as a relative offset from the synchronization channel, which may advantageously provide fewer possible RF channel positions and thereby save information (e.g., bits) in the system information message. As another example, certain embodiments may provide information about blanked OFDM subcarriers on one side of the RF carrier, which may advantageously allow emissions to be kept within regulatory requirements (for example, in cases where the frequency range available to the operator is very strict). As another example, certain embodiments may advantageously prevent unnecessary reduction in spectrum utilization, for example by providing information about blanked subcarriers in the system information only when it is necessary. Other advantages may be readily apparent to one having skill in the art. Certain embodiments may have none, some, or all of the recited advantages.

BRIEF DESCRIPTION OF THE DRAWINGS

For a more complete understanding of the disclosed embodiments and their features and advantages, reference is now made to the following description, taken in conjunction with the accompanying drawings, in which:

FIGURE 1 illustrates an example carrier raster;
FIGURE 2 illustrates an example synchronization channel frequency and raster;
FIGURE 3 is a block diagram illustrating an embodiment of a network, in accordance with certain embodiments;
FIGURE 4 illustrates an example synchronization channel frequency and raster and an offset to RF channel frequency, in accordance with certain embodiments;
FIGURE 5 illustrates an example operator license block with unwanted emissions, in accordance with certain embodiments;
FIGURE 6 illustrates an example operator license block when the RF carrier is placed on a fixed RF grid, in accordance with certain embodiments;
FIGURE 7 is a flow diagram of a method in a wireless device, in accordance with certain embodiments;
FIGURE 8 is a flow diagram of a method in a network node, in accordance with certain embodiments;
FIGURE 9 is a block schematic of an exemplary wireless device, in accordance with certain embodiments;
FIGURE 10 is a block schematic of an exemplary network node, in accordance with certain embodiments;
FIGURE 11 is a block schematic of an exemplary radio network controller or core network node, in accordance with certain embodiments;
FIGURE 12 is a block schematic of an exemplary wireless device, in accordance with certain embodiments; and
FIGURE 13 is a block schematic of an exemplary network node, in accordance with certain embodiments.

DETAILED DESCRIPTION

As described above, 5G systems, such as NR, will be able to operate in the same frequency bands as LTE, but also in new frequency bands in the mm-wave frequency range. These new bands are considerably larger than existing bands for LTE at lower frequencies and can be up to several gigahertz (GHz) wide. Using an RF carrier grid with, for example, 100 kHz separation could therefore lead to unmanageable search times, since there are so many possible raster points. It has been proposed to define a fixed set of synchronization channel frequencies on a synchronization channel raster, as described above in relation to FIGURE 2. There are, however, certain deficiencies associated with such an approach. For example, when a wireless device has identified a valid synchronization channel, the wireless device will still not have full knowledge of the position and channel bandwidth of the complete RF carrier. Additionally, if a license specifies a very strict licence block in which an operator can place an RF carrier, it may not be possible to place the RF carrier exactly centered in the license block (e.g., due to the coarse granularity imposed by the subcarrier spacing of NR). This creates the risk that RF emissions "spill" over on one side of the license block, potentially violating the license conditions or other regulation imposed on the operation. The present disclosure contemplates various embodiments that may address these and other deficiencies associated with existing approaches.

When the wireless device has identified the position of the synchronization channel, it needs to further identify the full RF channel. In certain embodiments, a network node (e.g., a base station (BS)) provides a system information message to the wireless device that is located within the span of the synchronization channel. The system information identifies the position of the RF channel center relative to the synchronization channel. This system information also provides the RF channel bandwidth, subcarrier spacing used for the data channels, and other information needed by the wireless device to fully acquire and/or continue to set up a connection with the network node.

As noted above, if the RF channel is not centered within the license block of the operator, this can cause the problem that RF emissions "spill over" on one side. In certain embodiments, the transmission of the OFDM signal can be "truncated" by not transmitting (e.g., blanking) one or more subcarriers on the side of the transmission that potentially causes the problem. In some cases, how many subcarriers to blank (if any), and on what side of the transmission, may be provided to the wireless device through the system information message.

According to one example embodiment, a method in a wireless device is disclosed. The wireless device identifies a synchronization channel part of an RF carrier in an operating band. In some cases, the wireless device identifies the synchronization channel part of the RF carrier in the operating band by determining a plurality of pre-determined synchronization raster points based on a synchronization channel raster associated with the synchronization channel part of the RF carrier. Each of the pre-determined synchronization raster points defines a possible location of the synchronization channel part of the RF carrier. The wireless device performs a cell search on one or more of the plurality of pre-determined synchronization raster points to identify the synchronization channel part of the RF carrier.

The wireless device obtains system information (e.g., by receiving a system information message) for use in determining a position of the RF carrier in the operating band relative to the identified synchronization channel part of the RF carrier. In some cases, the obtained system information may include one or more offset values (e.g., a first offset value defining an offset from the synchronization channel part of the RF carrier to a center frequency of the RF carrier). The wireless device determines, based on the obtained system information, the position of the RF carrier in the operating band relative to the identified synchronization channel part of the RF carrier. In some cases, the wireless device establishes a connection with the network node via the RF carrier. In some cases, the position of the RF carrier in the operating band may not be centered within a license block, and the wireless device may receive and/or transmit a truncated transmission of an OFDM symbol.

According to another example embodiment, a method in a network node is disclosed. The network node determines system information for use by a wireless device to determine a position of an RF carrier in an operating band relative to a synchronization channel part of the RF carrier. The determined system information may, for example, include one or more offset values (e.g., a first offset value defining an offset from the synchronization channel part of the RF carrier to a center frequency of the RF carrier). In some cases, the determined system information may also include a bandwidth of the RF carrier, a subcarrier spacing of one or more data channels, and/or a number of subcarriers to blank (and, in some cases, on which side of the transmission they are located). The network node sends the determined system information to the wireless device. In some cases, the network node may establish a connection with the wireless device via the RF carrier. In some cases, the position of the RF carrier in the operating band may not be centered within a license block, and the network node may receive and/or transmit a truncated transmission of an OFDM symbol.

Certain embodiments of the present disclosure may provide one or more technical advantages. As one example, certain embodiments may provide the position of the RF channel as a relative offset from the synchronization channel, which may advantageously provide fewer possible RF channel positions and thereby save information (e.g., bits) in the system information message. As an example, if the operating band is 1200 megahertz (MHz) wide, and the RF channel can be anywhere on a 120 kHz raster, there are 10,000 possible raster positions. If the synchronization channel is on a synchronization channel raster with 24 MHz between raster point, the wireless device would know that the RF channel center is within a 24 MHz range, once it has identified the synchronization channel. There would now only be 200 possible RF channel positions, relative to the synchronization channel. By using a relative offset, the number of possible RF channel positions is therefore reduced from 10,000 to 200, which advantageously reduces the amount of information that needs to be broadcasted in the system information.

As another example, certain embodiments may provide information about blanked OFDM subcarriers on one side of the RF carrier, which may advantageously allow emissions to be kept within regulatory requirements (for example, in cases where the frequency range available to the operator is very strict). An alternative and less advantageous approach would be to design the RF carrier to always have extra margin at both sides of the transmission by always transmitting fewer subcarriers. This, however, would give a loss in terms of lower utilization of the spectrum (a waste of spectrum resources), especially in cases where there are no regulatory restrictions imposed on the sides of the transmission. In certain embodiments, by providing information about blanked subcarriers in the system information, the spectrum utilization is only reduced in cases where it is necessary.

Other advantages may be readily apparent to one having skill in the art. Certain embodiments may have none, some, or all of the recited advantages.

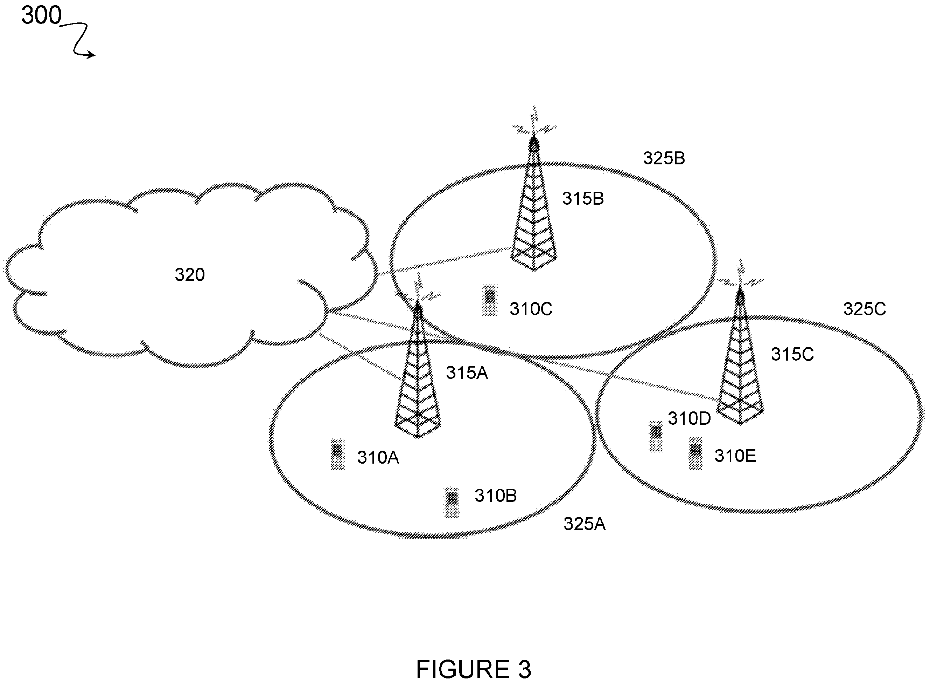

FIGURE 3 is a block diagram illustrating an embodiment of a network 300, in accordance with certain embodiments. Network 300 includes one or more wireless devices 310 (e.g., UEs), and one or more network node(s) 315 (e.g., evolved NodeB (eNB) or gNodeB (gNB)). More particularly, in the example of FIGURE 3 network 300 includes wireless devices 310A-E and network nodes 315A-C. Wireless devices 310 may communicate with network nodes 315 over a wireless interface. For example, a wireless device 310 may transmit wireless signals to one or more of network nodes 315, and/or receive wireless signals from one or more of network nodes 315. The wireless signals may contain voice traffic, data traffic, control signals, system information, and/or any other suitable information. In some embodiments, each network node 315 has an associated area of wireless signal coverage 325 (e.g., network node 315A has an associated area of wireless signal coverage 325A, network node 315B has an associated area of wireless signal coverage 325B, and network node 315C has an associated area of wireless signal coverage 325C). In certain embodiments, the area of wireless signal coverage 325 associated with a network node 315 may be referred to as a cell. In some embodiments, wireless devices 310 may have device-to-device (D2D) capability. Thus, wireless devices 310 may be able to receive signals from and/or transmit signals directly to another wireless device.

In certain embodiments, network nodes 315 may interface with a radio network controller (RNC). The RNC may control network nodes 315 and may provide certain radio resource management functions, mobility management functions, and/or other suitable functions. In certain embodiments, the functions of the RNC may be included in network node 315. The RNC may interface with a core network node. In certain embodiments, the RNC may interface with the core network node via an interconnecting network 320. Interconnecting network 320 may refer to any interconnecting system capable of transmitting audio, video, signals, data, messages, or any combination of the preceding. Interconnecting network 320 may include all or a portion of a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, or any other suitable communication link, including combinations thereof.

In some embodiments, the core network node may manage the establishment of communication sessions and various other functionalities for wireless devices 310. Wireless devices 310 may exchange certain signals with the core network node using the non-access stratum layer. In non-access stratum signaling, signals between wireless devices 310 and the core network node may be transparently passed through the radio access network (RAN). In certain embodiments, network nodes 315 may interface with one or more network nodes over an internode interface, such as, for example, an X2 interface.

As described above, example embodiments of network 300 may include one or more wireless devices 310, and one or more different types of network nodes capable of communicating (directly or indirectly) with wireless devices 310.

In some embodiments, the non-limiting term wireless device is used. Wireless devices 310 described herein can be any type of wireless device capable of communicating with network nodes 315 or another wireless device in a cellular or mobile communication system (e.g., over radio signals). Examples of wireless devices include a UE, a radio communication device, target device, UE, D2D UE, machine-type-communication (MTC) UE or UE capable of machine-to-machine (M2M) communication, low-cost and/or low-complexity UE, a sensor equipped with UE, tablet, Personal Digital Assistant (PDA), mobile terminals, smart phone, laptop embedded equipped (LEE), laptop mounted equipment (LME), USB dongles, Customer Premises Equipment (CPE), etc. Wireless devices 310 may operate under either normal coverage or enhanced coverage with respect to its serving cell. The enhanced coverage may be interchangeably referred to as extended coverage. Wireless devices 310 may also operate in a plurality of coverage levels (e.g., normal coverage, enhanced coverage level 1, enhanced coverage level 2, enhanced coverage level 3 and so on). In some cases, wireless devices 310 may also operate in out-of-coverage scenarios.

Also, in some embodiments the non-limiting term network node is used. It can be any kind of network node or radio network node. Examples of network nodes 315 include a BS, radio BS, Node B, multi-standard radio (MSR) radio node such as MSR BS, eNB, Master eNB (MeNB), Secondary eNB (SeNB), gNB, network controller, RNC, BS controller (BSC), relay node, donor node controlling relay, base transceiver station (BTS), access point (AP), radio AP, transmission point, transmission node, Remote Radio Unit (RRU), Remote Radio Head (RRH), nodes in distributed antenna system (DAS), Multi-cell/multicast Coordination Entity (MCE), core network node (e.g., Mobile Switching Center (MSC), Mobility Management Entity (MME), etc.), Operations & Management (O&M), Operations Support System (OSS), Self-Organizing Network (SON), positioning node (e.g., Evolved-Serving Mobile Location Center (E-SMLC)), Minimization of Drive Test (MDT), or any other suitable network node.

The terminology such as network node and wireless device should be considered non-limiting and does not imply a certain hierarchical relation between the two; in general "network node" could be considered as device 1 and "wireless device" as device 2, and these two devices communicate with each other over some radio channel.

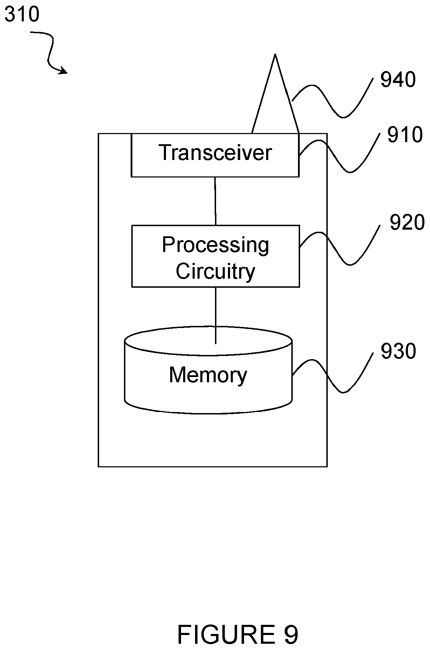

Example embodiments of wireless devices 310, network nodes 315, and other network nodes (such as RNC or core network node) are described in more detail below with respect to FIGURES 9-13.

Although FIGURE 3 illustrates a particular arrangement of network 300, the present disclosure contemplates that the various embodiments described herein may be applied to a variety of networks having any suitable configuration. For example, network 300 may include any suitable number of wireless devices 310 and network nodes 315, as well as any additional elements suitable to support communication between wireless devices or between a wireless device and another communication device (such as a landline telephone). Furthermore, although certain embodiments may be described as implemented in an NR network, the embodiments may be implemented in any appropriate type of telecommunication system supporting any suitable communication standards (including 5G standards) and using any suitable components, and are applicable to any radio access technology (RAT) or multi-RAT systems in which a wireless device receives and/or transmits signals (e.g., data). For example, the various embodiments described herein may be applicable to LTE, LTE-Advanced, NR, 4G, 5G, Narrowband Internet-of-Things (NB-IoT), MulteFire, UTRA, E-UTRA, UMTS, HSPA, GSM, cdma2000, WCDMA, WiMax, UMB, WiFi, Bluetooth, another suitable RAT, or any suitable combination of one or more RATs. In certain embodiments, wireless devices 310 and network nodes 315 may be capable of supporting a single or multiple RATs. The present disclosure contemplates that the various embodiments are equally applicable in DL and UL.

As described above, when a wireless device (e.g., wireless device 310A) is to first connect to network 300, wireless device 310A does not have knowledge of the frequencies of the DL RF carrier(s) (which may be interchangeably referred to herein as RF channel(s)) transmitted by the network (e.g., by network node 315A). In certain embodiments, wireless device 310A determines the position of the RF carrier in the operating band relative to the identified synchronization channel part of the RF carrier. As described in more detail below, the RF carrier frequency is defined in two steps. First, through a synchronization channel raster and, in a second step, the final RF carrier frequency is defined on an RF channel raster relative to the synchronization channel. The synchronization channel numbering and raster is described in more detail below.

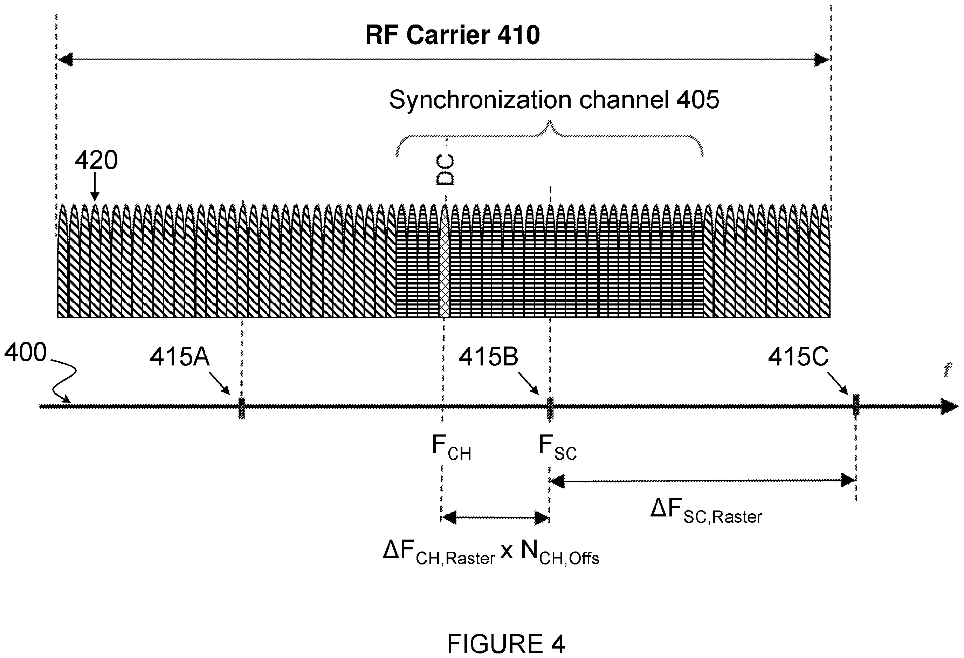

In some cases, the center frequency for the synchronization signal (SS) (e.g., SS block) may be different from the center frequency of the RF carrier. This opens up the possibility to have a synchronization signal raster that is more sparse than the channel raster that defines the possible RF carrier frequency (if some conditions are put on the placement and bandwidth of the synchronization channel). In certain embodiments, these conditions may include: a minimum RF channel bandwidth is defined for each operating band; the synchronization signal frequency raster is an integer multiple of data subcarrier spacing; and, in some cases, the bandwidth of the synchronization channel may be smaller than half of the RF channel bandwidth. As a result, there will be one complete synchronization channel contained inside the RF channel, regardless of where the RF channel is placed. An example is illustrated in FIGURE 4 (described in more detail below).

In certain embodiments, wireless device 310A identifies a synchronization channel part of an RF carrier in an operating band. In certain embodiments, the synchronization channel part of the RF carrier may comprise a synchronization signal block comprising a Primary Synchronization Signal (SSS) and a Secondary Synchronization Signal transmitted together with a Physical Broadcast Channel (PBCH).

Wireless device 310A may identify the synchronization channel part of the RF carrier in any suitable manner. As one example, wireless device 310A may determine a plurality of pre-determined synchronization raster points based on a synchronization channel raster associated with the synchronization channel part of the RF carrier. Each of the pre-determined synchronization raster points defines a possible location of the synchronization channel part of the RF carrier. Wireless device 310A may perform a cell search on one or more of the plurality of pre-determined synchronization raster points to identify the synchronization channel part of the RF carrier.

When wireless device 310A has identified the position of the synchronization channel, it needs to further identify the full RF channel. In certain embodiments, a network node (e.g., network node 315A) may determine system information for use by wireless device 310A to determine a position of the RF carrier in the operating band relative to the synchronization channel part of the RF carrier, and send the determined system information to wireless device 310A. The system information identifies the position of the RF channel center relative to the synchronization channel. In some cases, the system information may comprise one or more offset values (e.g., one or more frequency offset values). The one or more offset values may include at least a first offset value defining an offset from the synchronization channel part of the RF carrier to a center frequency of the RF carrier. In some cases, the center frequency of the RF carrier may correspond to a carrier raster point of a carrier raster associated with the RF carrier. This system information may also provide the RF channel bandwidth, subcarrier spacing used for the data channels, and other information needed by wireless device 310A to fully acquire and/or continue to set up a connection with the network node. In some cases, the system information may also include information about blanked OFDM subcarriers (e.g., how many subcarriers are blanked, and on what side of the transmission the blanked subcarriers occur). The system information may be transmitted by network node 315A and received by wireless device 310A in any suitable manner. For example, in certain embodiments, the system information may be transmitted in a Master Information Block (MIB), System Information Block (SIB), Remaining Minimum System Information (RMSI), or some combination of the above.

Wireless device 310A obtains the system information for use in determining the position of the RF carrier in the operating band relative to the identified synchronization channel part of the RF carrier. Wireless device 310A may obtain the system information in any suitable manner. As one example, wireless device 310A may receive a system information message including the system information (e.g., MIB, SIB, and/or RMSI). In some cases, at least a portion of the system information may be contained in the PBCH. Based on the obtained system information, wireless device 310A determines the position of the RF carrier in the operating band relative to the identified synchronization channel part of the RF carrier. The process for determining the position of the RF carrier by wireless device 310A is described in more detail below in relation to FIGURE 4. In some cases, wireless device 310A may determine, based on the obtained system information, the bandwidth of the RF carrier and/or the subcarrier spacing of one or more data channels.

In certain embodiments, wireless device 310A may establish a connection with network node 315A via the RF carrier. In some cases, wireless device 310A may receive (e.g., from network node 315A) an instruction to perform a handover to another RF carrier at another frequency.

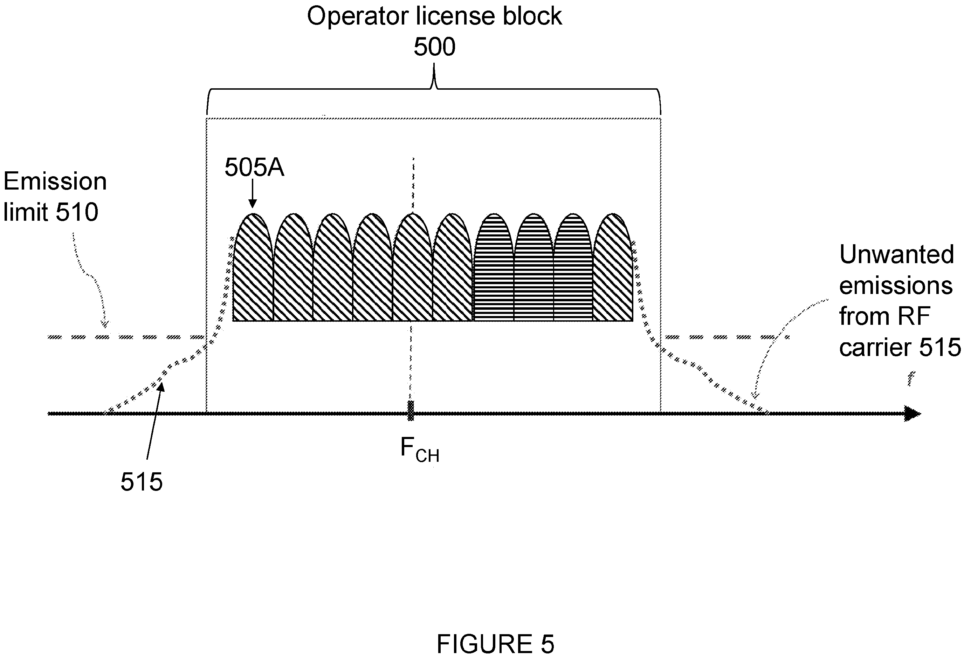

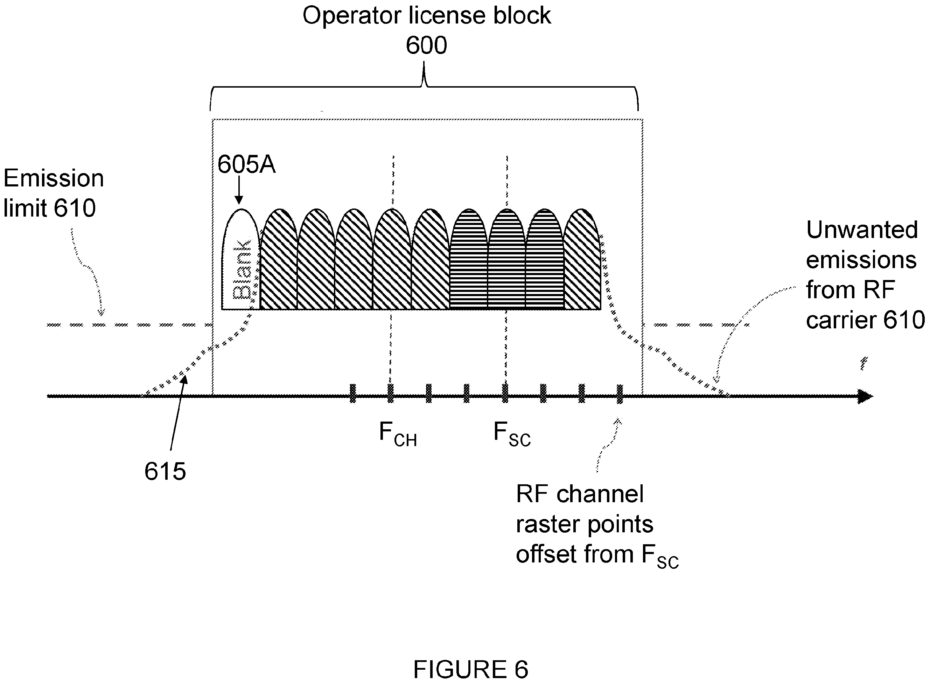

As noted above, in some cases the position of the RF carrier in the operating band may not be centered within the license block. In such a scenario, wireless device 310A may receive (e.g., from network node 315A) or transmit (e.g., to network node 315A), a truncated transmission of an OFDM symbol. The truncated transmission may include one or more blanked subcarriers on at least one side of the transmission. As noted above, in some cases the obtained system information may include information about blanked subcarriers (e.g., the number of blanked subcarriers and on what side of the transmission the blanked subcarriers are located. This is described in more detail below in relation to FIGURES 5 and 6.

FIGURE 4 illustrates an example synchronization channel frequency and raster and an offset to RF channel frequency, in accordance with certain embodiments. More particularly, FIGURE 4 illustrates a synchronization channel raster 400 for a synchronization channel 405 included in RF carrier 410. Synchronization channel raster 400 includes a plurality of synchronization channel raster points 415A-C. Synchronization channel 405 (and RF carrier 410) are made up of a plurality of subcarriers 420.

As described above, a wireless device (e.g., wireless device 310A described above in relation to FIGURE 3) determines, based on the obtained system information, a position of the RF carrier in the operating band relative to the identified synchronization channel part of the RF carrier. This process (i.e., defining the RF carrier 410) includes two steps. In certain embodiments, the first step in defining an RF channel frequency is to identify the synchronization channel part 405 (e.g., SS block) of RF carrier 410. As shown in FIGURE 4, synchronization channel raster 400 is defined with a separation $\Delta F_{SC,Raster}$ between raster points 415. Synchronization channel 405 can only be placed on one of synchronization raster points 415 (e.g., synchronization channel raster point 415B in the example of FIGURE 4). In certain embodiments, a unique synchronization channel raster 400 is specified for each operating band, providing a limited number of raster points 415 for a wireless device (e.g., wireless device 310A described above in relation to FIGURE 3) to search for at the initial access. Advantageously, this will vastly reduce the search time compared to the task of searching any possible point on a finer RF channel raster, which could have an order of magnitude more points within the operating band.

In certain embodiments, synchronization channel raster points 415 on synchronization channel raster 400 are defined through a 5G-RAN Synchronization Channel Number (GSCN) that defines the frequency Fsc of the synchronization channel portion 405 of RF carrier 410. The raster for each operating band is set by a raster point separation $\Delta F_{SC,Raster}$, a first raster point $F_{SC\_low}$ and a first raster point number $N_{SC,low}$. The equation defining the synchronization channel frequency Fsc of the raster point number Nsc (GSCN) is shown in Equation (1) below:

$$F_{SC} = F_{SC,Low} + \Delta F_{SC,Raster} \times (N_{SC} - N_{SC,Low}) \tag{1}$$

Synchronization channel raster 400 is defined as a range of GSCN numbers for each operating band, with the number range starting at $N_{SC,Low}$.

At initial access, a wireless device does not have any knowledge of the GSCN, but it knows the predetermined raster defined from Equation (1) above. It thereby performs a cell search on those pre-determined raster points.

In certain embodiments, the second step in defining the RF channel frequency identifies the RF channel frequency $F_{CH}$ that is defined in relation to the synchronization channel frequency Fsc. In certain embodiments, a 5G-RAN Radio Frequency Channel Offset (GRFCO) defines the offset from the synchronization channel to the RF carrier center frequency. An RF channel raster is defined relative to each point on synchronization channel raster 400 with a separation $\Delta F_{CH,Raster}$ between raster points. In certain embodiments, the RF channel can only be positioned on one of the RF channel raster points and its frequency is expressed as an offset relative to the frequency of the synchronization channel, as shown in FIGURE 4. The offset (and the corresponding GRFCO) can be both positive and negative.

The RF channel raster for each Synchronization Channel raster frequency point Fsc is set relative to Fsc by an RF channel raster point separation $\Delta F_{CH,Raster}$, with a range covering (at least) the full width of the synchronization channel raster separation $\Delta F_{SC,Raster}$.

In certain embodiments, the equation defining the RF channel frequency $F_{CH}$ with the offset $N_{CH,Offs}$ (GRFCO) is as shown in Equation (2) below:

$$F_{CH} = F_{SC} + \Delta F_{CH,Raster} \times N_{CH,Offs} \tag{2}$$

In some cases, the wireless device may be provided with the GRFCO from a network node (e.g., network node 315A described above in relation to FIGURE 3). For example, the GRFCO may be transmitted by the network node in a system information message that is placed on RF carrier 410 together with synchronization channel 405, and can therefore be read without full knowledge of the RF channel. Once the system information is read, the wireless device will know the RF channel frequency $F_{CH}$ and, in certain embodiments, other information provided in the system information, such as the RF channel bandwidth, subcarrier spacing for the data channels, or any other suitable information. In certain embodiments, the RF channel frequency $F_{CH}$ may be the center frequency of RF carrier 410 and may correspond to a carrier raster point of a carrier raster associated with RF carrier 410.

In paired spectrum, the GSCN and GRFCO define the DL RF carrier frequency. The UL RF channel frequency has a direct relation to the DL RF channel frequency through a fixed frequency offset with fixed duplex spacing. In cases of variable duplex spacing, the frequency offset between UL and DL can also be provided to the wireless device (e.g., through the system information message or other message).

As described above in relation to FIGURE 3, in certain embodiments the wireless device may be instructed to perform a handover to an RF channel at another frequency. In such a scenario, it would be sufficient to provide only the GSCN to the wireless device to find the synchronization channel of the other RF channel. It would also be possible to provide both the GSCN and GRFCO, possibly together with even more information about the RF carrier, in order to advantageously speed up the handover.

In order to achieve maximum spectrum utilization, a carrier (e.g., RF carrier 410 described above in relation to FIGURE 4) is usually designed to have minimum "guard" at the sides of the OFDM transmission. Still, any unwanted emissions (e.g., emissions created by the modulation spectrum and imperfections in the transmitter) have to be within the emission limits set by regulation or in other specifications. The carrier can then just barely be placed in an operator license block which is the same size as the RF channel, including the guard bands on the sides. When the RF channel position is defined in the manner described herein, however, there are restrictions on how the carrier can be placed (since both the synchronization channel raster and the RF channel raster are aligned with the subcarrier spacing), making it difficult to place the RF carrier centered in a license block. As described above, this creates a risk that RF emissions may "spill" over on one side of the license block, potentially violating the license conditions or other regulation imposed on the operation.

FIGURE 5 illustrates an example operator license block 500 with unwanted emissions, in accordance with certain embodiments. More particularly, FIGURE 5 illustrates operator license block 500 made up of a plurality of subcarriers 505 (one of which, 505A, is denoted in the figure). Note that the number of subcarriers in the example of FIGURE 5 is greatly reduced (as compared to the examples of FIGURES 2 and 4 described above) to amplify the effect of individual subcarriers. Normally, an RF channel would contain hundreds or even thousands of subcarriers.

In the example of FIGURE 5, an emission limit 510, which may be set by regulation or in other specifications, defines a limit on unwanted emissions created by, for example, the modulation spectrum and imperfections in the transmitter. As can be seen from the example of FIGURE 5, unwanted emissions 515 are spilling over to the side of subcarrier 505A and exceed emission limit 510, potentially violating the license conditions or other regulation imposed on the operation. One example approach to avoiding this is described below in relation to FIGURE 6.

FIGURE 6 illustrates an example operator license block when the RF carrier is placed on a fixed RF grid, in accordance with certain embodiments. More particularly, FIGURE 6 illustrates operator license block 600 made up of a plurality of subcarriers 605 (one of which, 605A, is denoted in the figure). Similar to FIGURE 5 described above, the number of subcarriers in the example of FIGURE 6 is greatly reduced (as compared to the examples of FIGURES 2 and 4 described above) to amplify the effect of individual subcarriers. In the example of FIGURE 6, an emission limit 610, which may be set by regulation or in other specifications, defines a limit on unwanted emissions created by, for example, the modulation spectrum and imperfections in the transmitter.

As shown in FIGURE 6, when the RF carrier is placed on a fixed RF channel grid, the channel may be offset within license block 600, since there is no RF channel raster position in the center of the block. In the example embodiment of FIGURE 6, the RF channel is shifted to the left side of license block 600, making the unwanted emissions 615 on the left side of subcarrier 605A spill over and exceed emission limit 610 set by regulation. In the example of FIGURE 6, this is avoided by blanking subcarrier 605A, resulting in unwanted emissions 615 being contained within emission limit 605.

For example, a network node (such as network node 315A described above in relation to FIGURE 3) may determine that the position of an RF carrier in an operating band is not centered within a license block. In such a scenario, network node 315A may determine system information that includes, for example, a number of subcarriers to blank and on what side of the transmission the blanked subcarriers occur. Network node 315A sends the determined system information (including the information about the blanked subcarriers) to a wireless device (such as wireless device 310A described above in relation to FIGURE 3. Thereafter, the network node (and/or the wireless device) may transmit and/or receive one or more truncated transmissions of an OFDM symbol. In certain embodiments, the truncated transmission may comprise one or more blanked subcarriers on at least one side of the transmission.

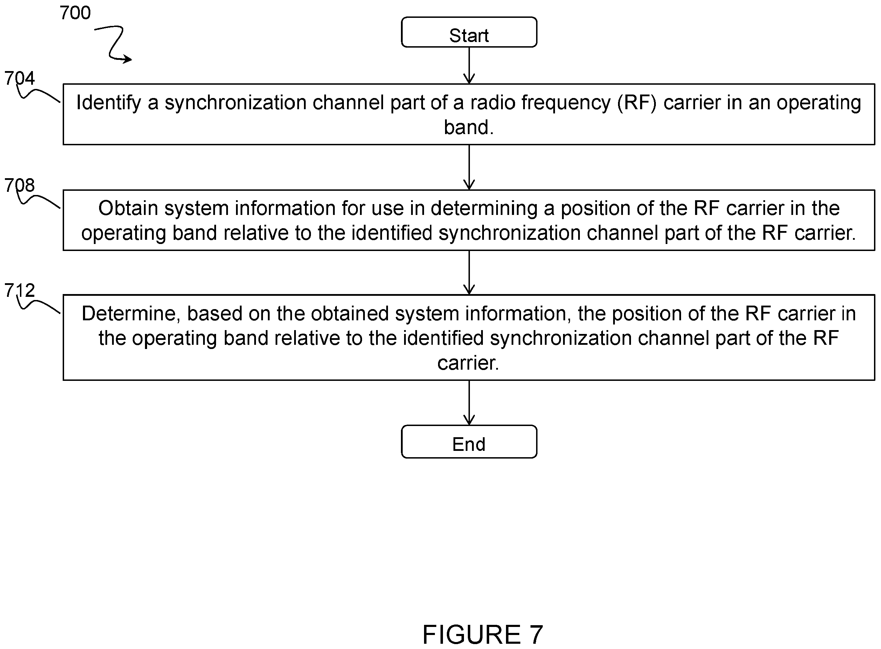

FIGURE 7 is a flow diagram of a method 700 in a wireless device, in accordance with certain embodiments. Method 700 begins at step 704, where the wireless device identifies a synchronization channel part of an RF carrier in an operating band. In certain embodiments, identifying the synchronization channel part of the RF carrier in the operating band may comprise: determining a plurality of pre-determined synchronization raster points based on a synchronization channel raster associated with the synchronization channel part of the RF carrier, each of the pre-determined synchronization raster points defining a possible location of the synchronization channel part of the RF carrier; and performing a cell search on one or more of the plurality of pre-determined synchronization raster points to identify the synchronization channel part of the RF carrier.

In certain embodiments, the synchronization channel part of the RF carrier may comprise an SS block comprising a PSS and a SSS transmitted together with a PBCH. In certain embodiments, at least a portion of the system information may be contained in the PBCH.

At step 708, the wireless device obtains system information for use in determining a position of the RF carrier in the operating band relative to the identified synchronization channel part of the RF carrier. In certain embodiments, obtaining system information may comprise receiving a system information message.

In certain embodiments, the obtained system information may comprise one or more offset values. In certain embodiments, the one or more offset values may comprise at least a first offset value defining an offset from the synchronization channel part of the RF carrier to a center frequency of the RF carrier. In certain embodiments, the center frequency of the RF carrier may correspond to a carrier raster point of a carrier raster associated with the RF carrier.

At step 712, the wireless device determines, based on the obtained system information, the position of the RF carrier in the operating band relative to the identified synchronization channel part of the RF carrier.

In certain embodiments, the method may comprise determining, based on the obtained system information, one or more of: a bandwidth of the RF carrier; and a subcarrier spacing of one or more data channels. In certain embodiments, the method may comprise establishing a connection with a network node via the RF carrier. In certain embodiments, the method may comprise receiving an instruction to perform a handover to another RF carrier at another frequency.

In certain embodiments, the position of the RF carrier in the operating band may not be centered within a license block, and the method may comprise receiving a truncated transmission of an OFDM symbol. The truncated transmission may comprise one or more blanked subcarriers on at least one side of the transmission. In certain embodiments, the position of the RF carrier in the operating band may not be centered within a license block, and the method may comprise transmitting a truncated transmission of an OFDM symbol. The truncated transmission may comprise one or more blanked subcarriers on at least one side of the transmission.

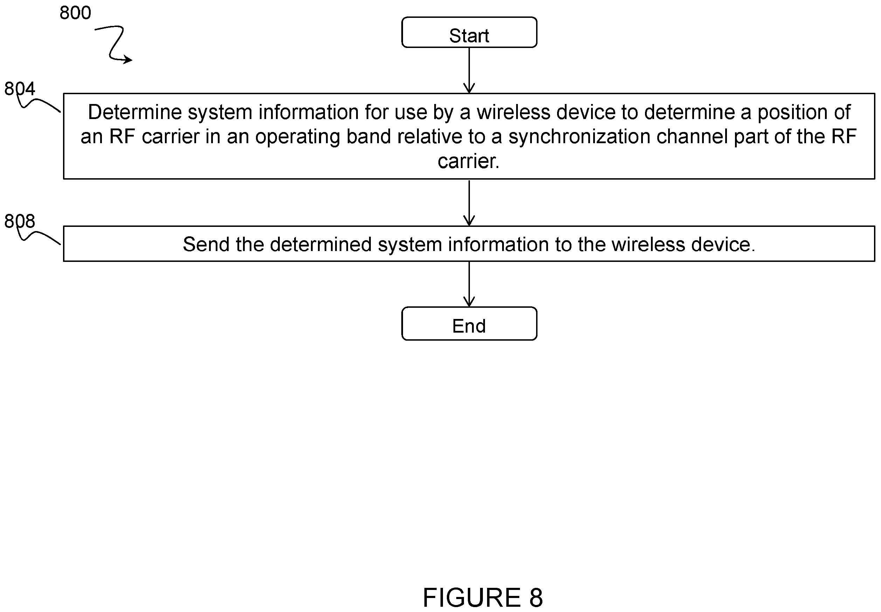

FIGURE 8 is a flow diagram of a method 800 in a network node, in accordance with certain embodiments. Method 800 begins at step 804, where the network node determines system information for use by a wireless device to determine a position of an RF carrier in an operating band relative to a synchronization channel part of the RF carrier. In certain embodiments, the determined system information may comprise one or more offset values. In certain embodiments, the one or more offset values may comprise at least a first offset value defining an offset from the synchronization channel part of the RF carrier to a center frequency of the RF carrier. In certain embodiments, the center frequency of the RF carrier may correspond to a carrier raster point of a carrier raster associated with the RF carrier.

In certain embodiments, the determined system information may comprise one or more of: a bandwidth of the RF carrier; and a subcarrier spacing of one or more data channels.

In certain embodiments, the synchronization channel part of the RF carrier may comprise an SS block comprising a PSS and a SSS transmitted together with a PBCH.

At step 808, the network node sends the determined system information to the wireless device. In certain embodiments, sending the determined system information to the wireless device may comprise sending at least a portion of the determined system information to the wireless device in the PBCH.

In certain embodiments, the method may comprise establishing a connection with the wireless device via the RF carrier. In certain embodiments, the method may comprise sending an instruction to the wireless device to perform a handover to another RF carrier at another frequency.

In certain embodiments, the position of the RF carrier in the operating band may not be centered within a license block, and the method may comprise receiving a truncated transmission of an OFDM symbol. The truncated transmission may comprise one or more blanked subcarriers on at least one side of the transmission. In certain embodiments, the position of the RF carrier in the operating band may not be centered within a license block, and the method may comprise transmitting a truncated transmission of an OFDM symbol. The truncated transmission may comprise one or more blanked subcarriers on at least one side of the transmission.

FIGURE 9 is a block schematic of an exemplary wireless device 310, in accordance with certain embodiments. Wireless device 310 may refer to any type of wireless device communicating with a node and/or with another wireless device in a cellular or mobile communication system. Examples of wireless device 310 include a mobile phone, a smart phone, a PDA, a portable computer (e.g., laptop, tablet), a sensor, an actuator, a modem, an MTC device / M2M device, LEE, LME, USB dongles, a D2D capable device, or another device that can provide wireless communication. A wireless device 310 may also be referred to as UE, a station (STA), a device, or a terminal in some embodiments. Wireless device 310 includes transceiver 910, processing circuitry 920, and memory 930. In some embodiments, transceiver 910 facilitates transmitting wireless signals to and receiving wireless signals from network node 315 (e.g., via antenna 940), processing circuitry 920 executes instructions to provide some or all of the functionality described above as being provided by wireless device 310, and memory 930 stores the instructions executed by processing circuitry 920.

Processing circuitry 920 may include any suitable combination of hardware and software implemented in one or more modules to execute instructions and manipulate data to perform some or all of the described functions of wireless device 310, such as the functions of wireless device 310 described above in relation to FIGURES 1-8. In some embodiments, processing circuitry 920 may include, for example, one or more computers, one or more central processing units (CPUs), one or more microprocessors, one or more applications, one or more application specific integrated circuits (ASICs), one or more field programmable gate arrays (FPGAs) and/or other logic.

Memory 930 is generally operable to store instructions, such as a computer program, software, an application including one or more of logic, rules, algorithms, code, tables, etc. and/or other instructions capable of being executed by processing circuitry 920. Examples of memory 930 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information, data, and/or instructions that may be used by processing circuitry 920.

Other embodiments of wireless device 310 may include additional components beyond those shown in FIGURE 9 that may be responsible for providing certain aspects of the wireless device's functionality, including any of the functionality described above and/or any additional functionality (including any functionality necessary to support the solution described above). As just one example, wireless device 310 may include input devices and circuits, output devices, and one or more synchronization units or circuits, which may be part of the processing circuitry 920. Input devices include mechanisms for entry of data into wireless device 310. For example, input devices may include input mechanisms, such as a microphone, input elements, a display, etc. Output devices may include mechanisms for outputting data in audio, video and/or hard copy format. For example, output devices may include a speaker, a display, etc.

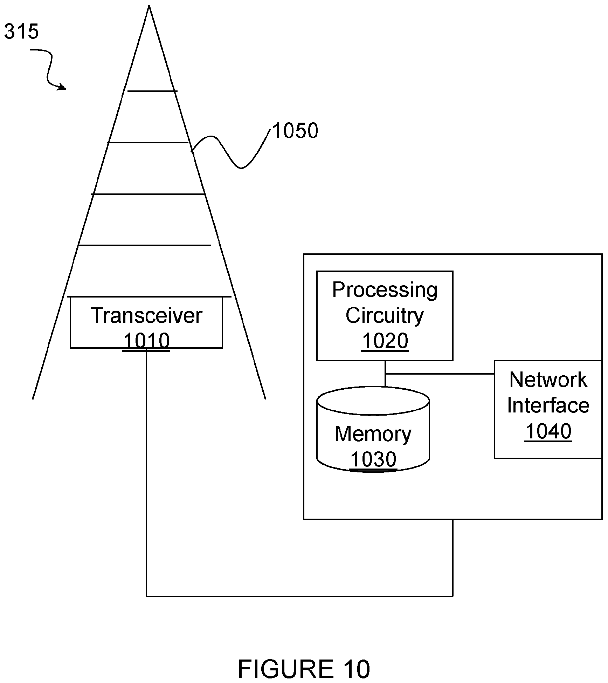

FIGURE 10 is a block schematic of an exemplary network node 315, in accordance with certain embodiments. Network node 315 may be any type of radio network node or any network node that communicates with a UE and/or with another network node. Examples of network node 315 include an eNB, a node B, a BS, a wireless AP (e.g., a Wi-Fi AP), a low power node, a BTS, relay, donor node controlling relay, transmission points, transmission nodes, RRU, RRH, MSR radio node such as MSR BS, nodes in DAS, O&M, OSS, SON, positioning node (e.g., E-SMLC), MDT, or any other suitable network node. Network nodes 315 may be deployed throughout a network as a homogenous deployment, heterogeneous deployment, or mixed deployment. A homogeneous deployment may generally describe a deployment made up of the same (or similar) type of network nodes 315 and/or similar coverage and cell sizes and inter-site distances. A heterogeneous deployment may generally describe deployments using a variety of types of network nodes 315 having different cell sizes, transmit powers, capacities, and inter-site distances. For example, a heterogeneous deployment may include a plurality of low-power nodes placed throughout a macro-cell layout. Mixed deployments may include a mix of homogenous portions and heterogeneous portions.

Network node 315 may include one or more of transceiver 1010, processing circuitry 1020, memory 1030, and network interface 1040. In some embodiments, transceiver 1010 facilitates transmitting wireless signals to and receiving wireless signals from wireless device 310 (e.g., via antenna 1050), processing circuitry 1020 executes instructions to provide some or all of the functionality described above as being provided by a network node 315, memory 1030 stores the instructions executed by processing circuitry 1020, and network interface 1040 communicates signals to backend network components, such as a gateway, switch, router, Internet, Public Switched Telephone Network (PSTN), core network nodes or radio network controllers 130, etc.

Processing circuitry 1020 may include any suitable combination of hardware and software implemented in one or more modules to execute instructions and manipulate data to perform some or all of the described functions of network node 315, such as those described above in relation to FIGURES 1-8. In some embodiments, processing circuitry 1020 may include, for example, one or more computers, one or more CPUs, one or more microprocessors, one or more applications, one or more ASICs, one or more FPGAs, and/or other logic.

Memory 1030 is generally operable to store instructions, such as a computer program, software, an application including one or more of logic, rules, algorithms, code, tables, etc. and/or other instructions capable of being executed by processing circuitry 1020. Examples of memory 1030 include computer memory (for example, RAM or ROM), mass storage media (for example, a hard disk), removable storage media (for example, a CD or a DVD), and/or or any other volatile or non-volatile, non-transitory computer-readable and/or computer-executable memory devices that store information.

In some embodiments, network interface 1040 is communicatively coupled to processing circuitry 1020 and may refer to any suitable device operable to receive input for network node 315, send output from network node 315, perform suitable processing of the input or output or both, communicate to other devices, or any combination of the preceding. Network interface 1040 may include appropriate hardware (e.g., port, modem, network interface card, etc.) and software, including protocol conversion and data processing capabilities, to communicate through a network.

Other embodiments of network node 315 may include additional components beyond those shown in FIGURE 10 that may be responsible for providing certain aspects of the radio network node's functionality, including any of the functionality described above and/or any additional functionality (including any functionality necessary to support the solutions described above). The various different types of network nodes may include components having the same physical hardware but configured (e.g., via programming) to support different radio access technologies, or may represent partly or entirely different physical components.

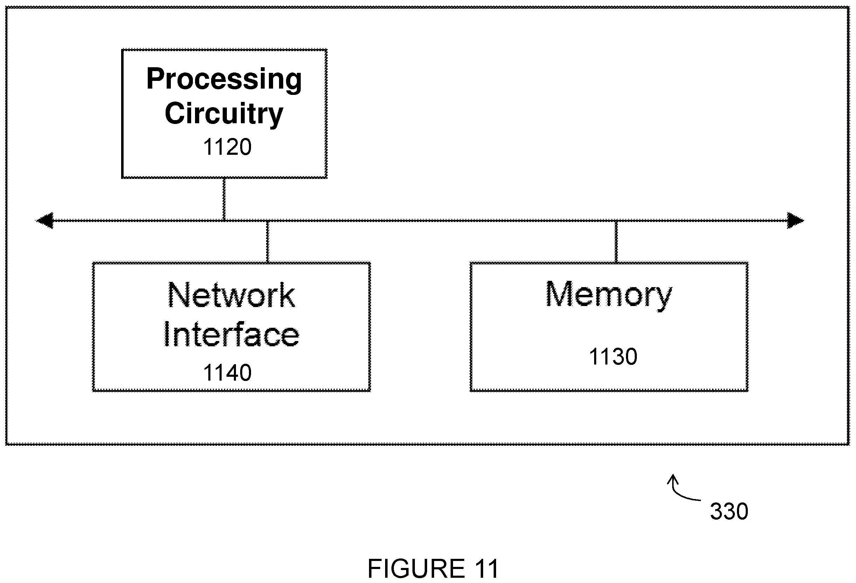

FIGURE 11 is a block schematic of an exemplary RNC or core network node 130, in accordance with certain embodiments. Examples of network nodes can include a MSC, a Serving General Packet Radio Service (GPRS) Support Node (SGSN), an MME, an RNC, a BSC, and so on. The RNC or core network node 130 includes processing circuitry 1120, memory 1130, and network interface 1140. In some embodiments, processing circuitry 1120 executes instructions to provide some or all of the functionality described above as being provided by the network node, memory 1130 stores the instructions executed by processing circuitry 1120, and network interface 1140 communicates signals to any suitable node, such as a gateway, switch, router, Internet, PSTN, network nodes 315, RNCs or core network nodes 130, etc.

Processing circuitry 1120 may include any suitable combination of hardware and software implemented in one or more modules to execute instructions and manipulate data to perform some or all of the described functions of the radio network controller or core network node 130. In some embodiments, processing circuitry 1120 may include, for example, one or more computers, one or more CPUs, one or more microprocessors, one or more applications, one or more ASICs, one or more FPGAs and/or other logic.

Memory 1130 is generally operable to store instructions, such as a computer program, software, an application including one or more of logic, rules, algorithms, code, tables, etc. and/or other instructions capable of being executed by processing circuitry 1120. Examples of memory 1130 include computer memory (for example, RAM or ROM), mass storage media (for example, a hard disk), removable storage media (for example, a CD or a DVD), and/or or any other volatile or non-volatile, non-transitory computer-readable and/or computer-executable memory devices that store information.

In some embodiments, network interface 1140 is communicatively coupled to processing circuitry 1120 and may refer to any suitable device operable to receive input for the network node, send output from the network node, perform suitable processing of the input or output or both, communicate to other devices, or any combination of the preceding. Network interface 1140 may include appropriate hardware (e.g., port, modem, network interface card, etc.) and software, including protocol conversion and data processing capabilities, to communicate through a network.

Other embodiments of the network node may include additional components beyond those shown in FIGURE 11 that may be responsible for providing certain aspects of the network node's functionality, including any of the functionality described above and/or any additional functionality (including any functionality necessary to support the solution described above).

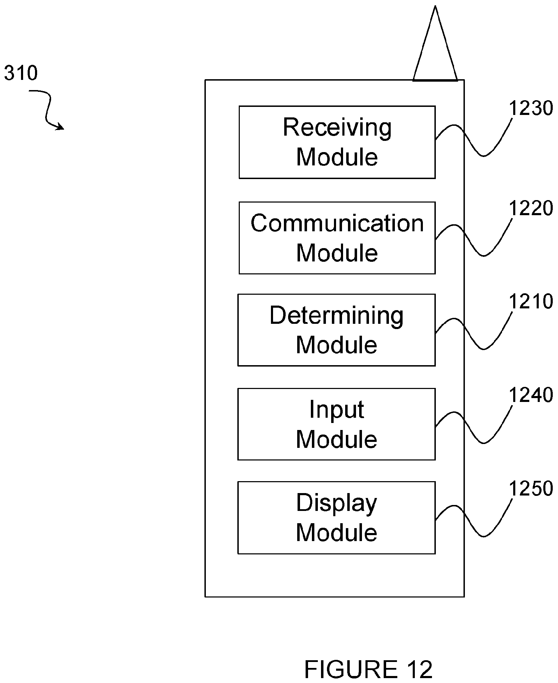

FIGURE 12 is a schematic block diagram of an exemplary wireless device, in accordance with certain embodiments. Wireless device 310 may include one or more modules. For example, wireless device 310 may include a determining module 1210, a communication module 1220, a receiving module 1230, an input module 1240, a display module 1250, and any other suitable modules. In some embodiments, one or more of determining module 1210, communication module 1220, receiving module 1230, input module 1240, display module 1250, or any other suitable module may be implemented using one or more processors, such as processing circuitry 920 described above in relation to FIGURE 9. In certain embodiments, the functions of two or more of the various modules may be combined into a single module. In certain embodiments, wireless device 310 may not include each module illustrated in FIGURE 12 (e.g., wireless device 310 may, in some instances, not include input module 1240 and/or display module 1250). Wireless device 310 may perform the methods for channel raster and numbering described above in relation to FIGURES 1-8.

Determining module 1210 may perform the processing functions of wireless device 310. As one example, determining module 1210 may identify a synchronization channel part of an RF carrier in an operating band. In certain embodiments, determining module 1210 may identify the synchronization channel part of the RF carrier by determining a plurality of pre-determined synchronization raster points based on a synchronization channel raster associated with the synchronization channel part of the RF carrier, each of the pre-determined synchronization raster points defining a possible location of the synchronization channel part of the RF carrier, and performing a cell search on one or more of the plurality of pre-determined synchronization raster points to identify the synchronization channel part of the RF carrier. As another example, determining module 1210 may obtain system information for use in determining a position of the RF carrier in the operating band relative to the identified synchronization channel part of the RF carrier. As still another example, determining module 1210 may determine, based on the obtained system information, the position of the RF carrier in the operating band relative to the identified synchronization channel part of the RF carrier. As yet another example, determining module 1210 may determine, based on the obtained system information, one or more of: a bandwidth of the RF carrier; and a subcarrier spacing of one or more data channels. As another example, determining module 1210 may establish a connection with a network node via the RF carrier. As another example, determining module 1210 may determine that the position of the RF carrier in the operating band is not centered within a license block.

Determining module 1210 may include or be included in one or more processors, such as processing circuitry 920 described above in relation to FIGURE 9. Determining module 1210 may include analog and/or digital circuitry configured to perform any of the functions of determining module 1210 and/or processing circuitry 920 described above. The functions of determining module 1210 described above may, in certain embodiments, be performed in one or more distinct modules.

Communication module 1220 may perform the transmission functions of wireless device 310. As one example, communication module 1220 may transmit a truncated transmission of an OFDM symbol (e.g., a truncated transmission comprising one or more blanked subcarriers on at least one side of the transmission). Communication module 1220 may include a transmitter and/or a transceiver, such as transceiver 910 described above in relation to FIGURE 9. Communication module 1220 may include circuitry configured to wirelessly transmit messages and/or signals. In particular embodiments, communication module 1220 may receive messages and/or signals for transmission from determining module 1210. In certain embodiments, the functions of communication module 1220 described above may be performed in one or more distinct modules.

Receiving module 1230 may perform the receiving functions of wireless device 310. For example, receiving module 1230 may obtain system information for use in determining a position of the RF carrier in the operating band relative to the identified synchronization channel part of the RF carrier (e.g., by receiving a system information message). As another example, receiving module 1230 may receive an instruction to perform a handover to another RF carrier at another frequency. As still another example, receiving module 1230 may receive a truncated transmission of an OFDM symbol (e.g., a truncated transmission comprising one or more blanked subcarriers on at least one side of the transmission). Receiving module 1230 may include a receiver and/or a transceiver. Receiving module 1230 may include a receiver and/or a transceiver, such as transceiver 910 described above in relation to FIGURE 9. Receiving module 1230 may include circuitry configured to wirelessly receive messages and/or signals. In particular embodiments, receiving module 1230 may communicate received messages and/or signals to determining module 1210. The functions of receiving module 1230 described above may, in certain embodiments, be performed in one or more distinct modules.

Input module 1240 may receive user input intended for wireless device 310. For example, the input module may receive key presses, button presses, touches, swipes, audio signals, video signals, and/or any other appropriate signals. The input module may include one or more keys, buttons, levers, switches, touchscreens, microphones, and/or cameras. The input module may communicate received signals to determining module 1210. The functions of input module 1240 described above may, in certain embodiments, be performed in one or more distinct modules.

Display module 1250 may present signals on a display of wireless device 310. Display module 1250 may include the display and/or any appropriate circuitry and hardware configured to present signals on the display. Display module 1250 may receive signals to present on the display from determining module 1210. The functions of display module 1250 described above may, in certain embodiments, be performed in one or more distinct modules.

Determining module 1210, communication module 1220, receiving module 1230, input module 1240, and display module 1250 may include any suitable configuration of hardware and/or software. Wireless device 310 may include additional modules beyond those shown in FIGURE 12 that may be responsible for providing any suitable functionality, including any of the functionality described above and/or any additional functionality (including any functionality necessary to support the various solutions described herein).

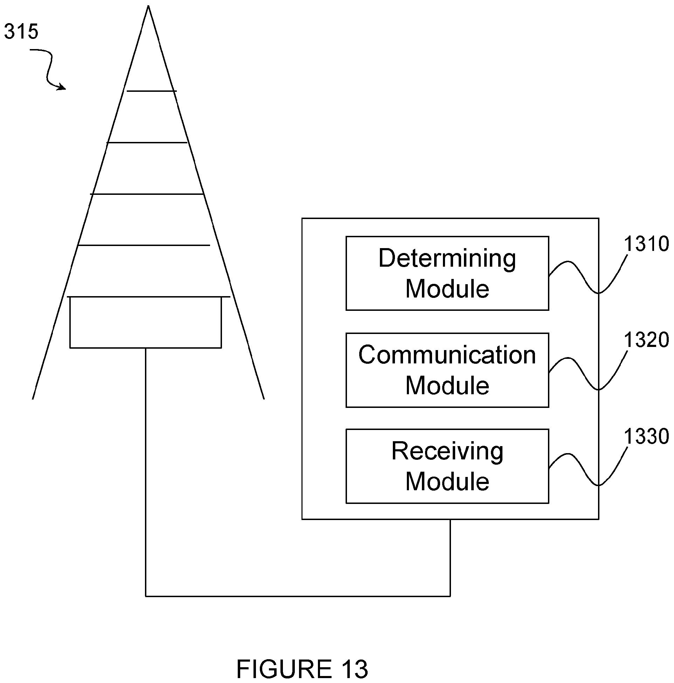

FIGURE 13 is a schematic block diagram of an exemplary network node 315, in accordance with certain embodiments. Network node 315 may include one or more modules. For example, network node 315 may include determining module 1310, communication module 1320, receiving module 1330, and any other suitable modules. In some embodiments, one or more of determining module 1310, communication module 1320, receiving module 1330, or any other suitable module may be implemented using one or more processors, such as processing circuitry 1020 described above in relation to FIGURE 10. In certain embodiments, the functions of two or more of the various modules may be combined into a single module. In certain embodiments, network node 315 may not include each module illustrated in FIGURE 13. Network node 315 may perform the methods for channel raster and numbering described above with respect to FIGURES 1-8.

Determining module 1310 may perform the processing functions of network node 315. As one example, determining module 1310 may determine system information for use by a wireless device to determine a position of an RF carrier in an operating band relative to a synchronization channel part of the RF carrier. As another example, determining module 1310 may establish a connection with the wireless device via the RF carrier. As still another example, determining module 1310 may determine that the position of the RF carrier in the operating band is not centered within a license block. Determining module 1310 may include or be included in one or more processors, such as processing circuitry 1020 described above in relation to FIGURE 10. Determining module 1310 may include analog and/or digital circuitry configured to perform any of the functions of determining module 1310 and/or processing circuitry 1020 described above. The functions of determining module 1310 may, in certain embodiments, be performed in one or more distinct modules.

Communication module 1320 may perform the transmission functions of network node 315. As one example, communication module 1320 may send the determined system information to the wireless device (in certain embodiments, by sending at least a portion of the determined system information to the wireless device in the PBCH). As another example, communication module 1320 may send an instruction to the wireless device to perform a handover to another RF carrier at another frequency. As still another example, communication module 1320 may transmit a truncated transmission of an OFDM symbol (e.g., a truncated transmission comprising one or more blanked subcarriers on at least one side of the transmission). Communication module 1320 may transmit messages to one or more of wireless devices 310. Communication module 1320 may include a transmitter and/or a transceiver, such as transceiver 1010 described above in relation to FIGURE 10. Communication module 1320 may include circuitry configured to wirelessly transmit messages and/or signals. In particular embodiments, communication module 1320 may receive messages and/or signals for transmission from determining module 1310 or any other module. The functions of communication module 1320 may, in certain embodiments, be performed in one or more distinct modules.

Receiving module 1330 may perform the receiving functions of network node 315. As one example, receiving module 1330 may receive a truncated transmission of an OFDM symbol (e.g., a truncated transmission comprising one or more blanked subcarriers on at least one side of the transmission). Receiving module 1330 may receive any suitable information from a wireless device. Receiving module 1330 may include a receiver and/or a transceiver, such as transceiver 1010 described above in relation to FIGURE 10. Receiving module 1330 may include circuitry configured to wirelessly receive messages and/or signals. In particular embodiments, receiving module 1330 may communicate received messages and/or signals to determining module 1310 or any other suitable module. The functions of receiving module 1330 may, in certain embodiments, be performed in one or more distinct modules.

Determining module 1310, communication module 1320, and receiving module 1330 may include any suitable configuration of hardware and/or software. Network node 315 may include additional modules beyond those shown in FIGURE 13 that may be responsible for providing any suitable functionality, including any of the functionality described above and/or any additional functionality (including any functionality necessary to support the various solutions described herein).

The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic. As used in this document, "each" refers to each member of a set or each member of a subset of a set.

The methods may include more, fewer, or other steps. Additionally, steps may be performed in any suitable order.

**Claims**

1. A method (700) in a wireless device (310), comprising:

   identifying (704) a synchronization channel part of a radio frequency (RF) carrier in an operating band;
   obtaining (708) system information for use in determining a position of the RF carrier in the operating band relative to the identified synchronization channel part of the RF carrier; and
   determining (712), based on the obtained system information, the position of the RF carrier in the operating band relative to the identified synchronization channel part of the RF carrier, wherein the position of the RF carrier in the operating band is not centered within a license block; and the method comprises at least one of receiving or transmitting a truncated transmission of an orthogonal frequency division multiplexing (OFDM) symbol, the truncated transmission comprising one or more blanked subcarriers on at least one side of the transmission.

2. The method of Claim 1, wherein identifying the synchronization channel part of the RF carrier in the operating band comprises:

   determining a plurality of pre-determined synchronization raster points based on a synchronization channel raster associated with the synchronization channel part of the RF carrier, each of the pre-determined synchronization raster points defining a possible location of the synchronization channel part of the RF carrier; and
   performing a cell search on one or more of the plurality of pre-determined synchronization raster points to identify the synchronization channel part of the RF carrier.

3. The method of any of Claims 1-2, wherein obtaining system information comprises receiving a system information message.

4. The method of any of Claims 1-3, wherein the synchronization channel part of the RF carrier comprises a synchronization signal block comprising a primary synchronization signal and a secondary synchronization signal transmitted together with a Physical Broadcast Channel (PBCH).

5. The method of Claim 4, wherein at least a portion of the system information is contained in the PBCH.

6. The method of any of Claims 1-5, wherein the obtained system information comprises one or more offset values.

7. The method of Claim 6, wherein the one or more offset values comprise at least a first offset value defining an offset from the synchronization channel part of the RF carrier to a center frequency of the RF carrier.

8. A method (800) in a network node (315), comprising:

   determining (804) system information for use by a wireless device (310) to determine a position of an RF carrier in an operating band relative to a synchronization channel part of the RF carrier; and
   sending (808) the determined system information to the wireless device, wherein the position of the RF carrier in the operating band is not centered within a license block; and the method comprises at least one of receiving or transmitting a truncated transmission of an orthogonal frequency division multiplexing (OFDM) symbol, the truncated transmission comprising one or more blanked subcarriers on at least one side of the transmission.

9. The method of Claim 8, wherein the synchronization channel part of the RF carrier comprises a synchronization signal block comprising a primary synchronization signal and a secondary synchronization signal transmitted together with a Physical Broadcast Channel (PBCH).

10. The method of Claim 9, wherein sending the determined system information to the wireless device comprises sending at least a portion of the determined system information to the wireless device in the PBCH.

11. The method of any of Claims 8-10, wherein the determined system information comprises one or more offset values.

12. The method of Claim 11, wherein the one or more offset values comprise at least a first offset value defining an offset from the synchronization channel part of the RF carrier to a center frequency of the RF carrier.

13. A wireless device (310), comprising:

> a receiver (910, 1230);
> a transmitter (910, 1220); and
> processing circuitry (920, 1210) coupled to the receiver and the transmitter, the processing circuitry configured to:
>
> > identify (704) a synchronization channel part of a radio frequency (RF) carrier in an operating band;
> > obtain (708) system information for use in determining a position of the RF carrier in the operating band relative to the identified synchronization channel part of the RF carrier; and
> >
> > determine (712), based on the obtained system information, the position of the RF carrier in the operating band relative to the identified synchronization channel part of
> > the RF carrier, wherein the position of the RF carrier in the operating band is not centered within a license block; and the processing circuitry is configured to receive, via the receiver, and/or transmit, via the transmitter, a truncated transmission of an orthogonal frequency division multiplexing (OFDM) symbol, the truncated transmission comprising one or more blanked subcarriers on at least one side of the transmission.

14. A network node (315), comprising:

> a receiver (1010, 1330);
> a transmitter (1010, 1320); and
> processing circuitry (1020, 1310) coupled to the receiver and the transmitter, the processing circuitry configured to:
>
> > determine (804) system information for use by a wireless device (310) to determine a position of an RF carrier in an operating band relative to a synchronization channel part of the RF carrier; and
> > send (808), via the transmitter, the determined system information to the
> >
> > wireless device, wherein the position of the RF carrier in the operating band is not centered within a license block; and the processing circuitry is configured to receive, via the receiver, and/or transmit, via the transmitter, a truncated transmission of an orthogonal frequency division multiplexing (OFDM) symbol, the truncated transmission comprising one or more blanked subcarriers on at least one side of the transmission.

15. A computer program comprising instructions, which when executed by a processor, causes the processor to perform actions according to any of the claims 1-12.

**Patentansprüche**

1. Verfahren (700) in einer drahtlosen Vorrichtung (310), das Folgendes umfasst:

> Identifizieren (704) eines Synchronisationskanalteils eines Hochfrequenz(HF)-Trägers in einem Betriebsband;
> Erhalten (708) von Systeminformationen zur Verwendung beim Bestimmen einer Position des HF-Trägers in dem Betriebsband relativ zu dem identifizierten Synchronisationskanalteil des HF-Trägers; und
> Bestimmen (712), basierend auf den erhaltenen Systeminformationen, der Position des HF-Trägers in dem Betriebsband relativ zu dem identifizierten Synchronisationskanalteil des HF-Trägers, wobei die Position des HF-Trägers in dem Betriebsband nicht innerhalb eines Lizenzblock zentriert ist; und wobei das Verfahren ein Empfangen und/oder ein Übertragen einer abgeschnittenen Übertragung eines Orthogonalen-Frequenzmultiplex(orthogonal frequency division multiplexing - OFDM)-Symbols umfasst, wobei die abgeschnittene Übertragung einen oder mehrere ausgeblendete Unterträger auf wenigstens einer Seite der Übertragung umfasst.

**2.** Verfahren nach Anspruch 1, wobei das Identifizieren des Synchronisationskanalteils des HF-Trägers in dem Betriebsband Folgendes umfasst:

Bestimmen mehrerer zuvor bestimmter Synchronisationsrasterpunkte basierend auf einem Synchronisationskanalraster, das mit dem Synchronisationskanalteil des HF-Trägers verknüpft ist, wobei jeder der zuvor bestimmten Synchronisationsrasterpunkte einen möglichen Ort des Synchronisationskanalteils des HF-Trägers definiert; und
Durchführen einer Zellsuche an einem oder mehreren der mehreren zuvor bestimmten Synchronisationsrasterpunkte, um den Synchronisationskanalteil des HF-Trägers zu identifizieren.

**3.** Verfahren nach einem der Ansprüche 1-2, wobei das Erhalten von Systeminformationen das Empfangen einer Systeminformationsnachricht umfasst.

**4.** Verfahren nach einem der Ansprüche 1-3, wobei der Synchronisationskanalteil des HF-Trägers einen Synchronisationssignalblock umfasst, der ein primäres Synchronisationssignal und ein sekundäres Synchronisationssignal umfasst, die zusammen mit einem physischen Broadcastkanal (Physical Broadcast Channel - PBCH) übertragen werden.

**5.** Verfahren nach Anspruch 4, wobei wenigstens ein Abschnitt der Systeminformationen in dem PBCH enthalten ist.

**6.** Verfahren nach einem der Ansprüche 1-5, wobei die erhaltenen Systeminformationen einen oder mehrere Offsetwerte umfassen.

**7.** Verfahren nach Anspruch 6, wobei der eine oder die mehreren Offsetwerte wenigstens einen ersten Offsetwert, der einen Offset von dem Synchronisationskanalteil des HF-Trägers zu einer Mittenfrequenz des HF-Trägers definiert, umfassen.

**8.** Verfahren (800) in einem Netzwerkknoten (315), das Folgendes umfasst:

Bestimmen (804) von Systeminformationen zur Verwendung durch eine drahtlose Vorrichtung (310), um eine Position eines HF-Trägers in einem Betriebsband relativ zu einem Synchronisationskanalteil des HF-Trägers zu bestimmen; und
Senden (808) der bestimmten Systeminformationen an die drahtlose Vorrichtung, wobei die Position des HF-Trägers in dem Betriebsband nicht innerhalb eines Lizenzblock zentriert ist; und wobei das Verfahren ein Empfangen und/oder ein Übertragen einer abgeschnittenen Übertragung eines Orthogonalen-Frequenzmultiplex(OFDM)-Symbols umfasst, wobei die abgeschnittene Übertragung einen oder mehrere ausgeblendete Unterträger auf wenigstens einer Seite der Übertragung umfasst.

**9.** Verfahren nach Anspruch 8, wobei der Synchronisationskanalteil des HF-Trägers einen Synchronisationssignalblock umfasst, der ein primäres Synchronisationssignal und ein sekundäres Synchronisationssignal umfasst, die zusammen mit einem physischen Broadcastkanal (PBCH) übertragen werden.

**10.** Verfahren nach Anspruch 9, wobei das Senden der bestimmten Systeminformationen an die drahtlose Vorrichtung das Senden wenigstens eines Abschnitts der bestimmten Systeminformationen an die drahtlose Vorrichtung in dem PBCH umfasst.

**11.** Verfahren nach einem der Ansprüche 8-10, wobei die bestimmten Systeminformationen einen oder mehrere Offsetwerte umfassen.

**12.** Verfahren nach Anspruch 11, wobei der eine oder die mehreren Offsetwerte wenigstens einen ersten Offsetwert, der einen Offset von dem Synchronisationskanalteil des HF-Trägers zu einer Mittenfrequenz des HF-Trägers definiert, umfassen.

**13.** Drahtlose Vorrichtung (310), die Folgendes umfasst:

einen Empfänger (910, 1230);
einen Transmitter (910, 1220); und
Verarbeitungsschaltungsanordnung (920, 1210), die mit dem Empfänger und dem Transmitter gekoppelt ist, wobei die Verarbeitungsschaltungsanordnung für Folgendes konfiguriert ist:

Identifizieren (704) eines Synchronisationskanalteils eines Hochfrequenz(HF)-Trägers in einem Betriebsband;
Erhalten (708) von Systeminformationen zur Verwendung beim Bestimmen einer Position des HF-Trägers in dem Betriebsband relativ zu dem identifizierten Synchronisationskanalteil des HF-Trägers; und

Bestimmen (712), basierend auf den erhaltenen Systeminformationen, der Position des HF-Trägers in dem Betriebsband relativ zu dem identifizierten Synchronisationskanalteil des HF-Trägers, wobei die Position des HF-Trägers in dem Betriebsband nicht innerhalb eines Lizenzblock zentriert ist; und die Verarbeitungsschaltungsanordnung konfiguriert ist, um über den Empfänger eine abgeschnittene Übertragung eines Orthogonalen-Frequenzmultiplex(OFDM)-Symbols zu empfangen und/oder diese über den Transmitter zu übertragen, wobei die abgeschnittene Übertragung einen oder mehrere ausgeblendete Unterträger auf wenigstens einer Seite der Übertragung umfasst.

**14.** Netzwerkknoten (315), der Folgendes umfasst:

einen Empfänger (1010, 1330);
einen Transmitter (1010, 1320); und
Verarbeitungsschaltungsanordnung (1020, 1310), die mit dem Empfänger und dem Transmitter gekoppelt ist, wobei die Verarbeitungsschaltungsanordnung für Folgendes konfiguriert ist:

Bestimmen (804) von Systeminformationen zur Verwendung durch eine drahtlose Vorrichtung (310), um eine Position eines HF-Trägers in einem Betriebsband relativ zu einem Synchronisationskanalteil des HF-Trägers zu bestimmen; und
Senden (808), über den Transmitter, der bestimmten Systeminformationen an die drahtlose Vorrichtung, wobei die Position des HF-Trägers in dem Betriebsband nicht innerhalb eines Lizenzblocks zentriert ist; und die Verarbeitungsschaltungsanordnung konfiguriert ist, um über den Empfänger eine abgeschnittene Übertragung eines Orthogonalen-Frequenzmultiplex(OFDM)-Symbols zu empfangen und/oder diese über den Transmitter zu übertragen, wobei die abgeschnittene Übertragung einen oder mehrere ausgeblendete Unterträger auf wenigstens einer Seite der Übertragung umfasst.

**15.** Computerprogramm, das Anweisungen, die, wenn sie durch einen Prozessor ausgeführt werden, den Prozessor veranlassen, Aktionen nach einem der Ansprüche 1-12 durchzuführen, umfasst.

## Revendications

**1.** Procédé (700) dans un dispositif sans fil (310), comprenant :

l'identification (704) d'une partie de canal de synchronisation d'une porteuse de radiofréquence (RF) dans une bande de fonctionnement ;
l'obtention (708) d'informations de système destinées à être utilisées pour déterminer une position de la porteuse RF dans la bande de fonctionnement par rapport à la partie de canal de synchronisation identifiée de la porteuse RF ; et
la détermination (712), sur la base des informations de système obtenues, de la position de la porteuse RF dans la bande de fonctionnement par rapport à la partie de canal de synchronisation identifiée de la porteuse RF, la position de la porteuse RF dans la bande de fonctionnement n'étant pas centrée à l'intérieur d'un bloc de licence ; et le procédé comprenant la réception et/ou la transmission d'une transmission tronquée d'un symbole de multiplexage par répartition orthogonale de la fréquence (MROF), la transmission tronquée comprenant une ou plusieurs sous-porteuses supprimées sur au moins un côté de la transmission.

**2.** Procédé selon la revendication 1, dans lequel l'identification de la partie de canal de synchronisation de la porteuse RF dans la bande de fonctionnement comprend :

la détermination d'une pluralité de points de trame de synchronisation prédéterminés sur la base d'une trame de canal de synchronisation associée à la partie de canal de synchronisation de la porteuse RF, chacun des points de trame de synchronisation prédéterminés définissant un emplacement possible de la partie de canal de synchronisation de la porteuse RF ; et
le fait d'effectuer une recherche de cellule sur un ou plusieurs de la pluralité de points de trame de synchronisation prédéterminés pour identifier la partie de canal de synchronisation de la porteuse RF.

3. Procédé selon l'une quelconque des revendications 1 à 2, dans lequel l'obtention d'informations de système comprend la réception d'un message d'informations de système.

4. Procédé selon l'une quelconque des revendications 1 à 3, dans lequel la partie de canal de synchronisation de la porteuse RF comprend un bloc de signal de synchronisation comprenant un signal de synchronisation primaire et un signal de synchronisation secondaire transmis conjointement avec un canal de diffusion physique (PBCH).

5. Procédé selon la revendication 4, dans lequel au moins une partie des informations de système est contenue dans le PBCH.

6. Procédé selon l'une quelconque des revendications 1 à 5, dans lequel les informations de système obtenues comprennent une ou plusieurs valeurs de décalage.

7. Procédé selon la revendication 6, dans lequel la ou les valeurs de décalage comprennent au moins une première valeur de décalage définissant un décalage à partir de la partie de canal de synchronisation de la porteuse RF par rapport à une fréquence centrale de la porteuse RF.

8. Procédé (800) dans un nœud de réseau (315), comprenant :

la détermination (804) d'informations de système destinées à être utilisées par un dispositif sans fil (310) pour déterminer une position d'une porteuse RF dans une bande de fonctionnement par rapport à une partie de canal de synchronisation de la porteuse RF ; et
l'envoi (808) des informations de système déterminées au dispositif sans fil, la position de la porteuse RF dans la bande de fonctionnement n'étant pas centrée à l'intérieur d'un bloc de licence ; et le procédé comprenant la réception et/ou la transmission d'une transmission tronquée d'un symbole de multiplexage par répartition orthogonale de la fréquence (MROF), la transmission tronquée comprenant une ou plusieurs sous-porteuses supprimées sur au moins un côté de la transmission.

9. Procédé selon la revendication 8, dans lequel la partie de canal de synchronisation de la porteuse RF comprend un bloc de signal de synchronisation comprenant un signal de synchronisation primaire et un signal de synchronisation secondaire transmis conjointement avec un canal de diffusion physique (PBCH).

10. Procédé selon la revendication 9, dans lequel l'envoi des informations de système déterminées au dispositif sans fil comprend l'envoi d'au moins une partie des informations de système déterminées au dispositif sans fil dans le PBCH.

11. Procédé selon l'une quelconque des revendications 8 à 10, dans lequel les informations de système déterminées comprennent une ou plusieurs valeurs de décalage.

12. Procédé selon la revendication 11, dans lequel la ou les valeurs de décalage comprennent au moins une première valeur de décalage définissant un décalage à partir de la partie de canal de synchronisation de la porteuse RF par rapport à une fréquence centrale de la porteuse RF.

13. Dispositif sans fil (310), comprenant :

un récepteur (910, 1230) ;
un transmetteur (910, 1220) ; et
une circuiterie de traitement (920, 1210) couplée au récepteur et au transmetteur, la circuiterie de traitement étant configurée pour :

identifier (704) une partie de canal de synchronisation d'une porteuse de radiofréquence (RF) dans une bande de fonctionnement ;

obtenir (708) des informations de système destinées à être utilisées pour déterminer une position de la porteuse RF dans la bande de fonctionnement par rapport à la partie de canal de synchronisation identifiée de la porteuse RF ; et

déterminer (712), sur la base des informations de système obtenues, la position de la porteuse RF dans la bande de fonctionnement par rapport à la partie de canal de synchronisation identifiée de la porteuse RF, la position de la porteuse RF dans la bande de fonctionnement n'étant pas centrée à l'intérieur d'un bloc de licence ; et la circuiterie de traitement étant configurée pour recevoir, par l'intermédiaire du récepteur, et/ou transmettre, par l'intermédiaire du transmetteur, une transmission tronquée d'un symbole de multiplexage par répartition orthogonale de la fréquence (MROF), la transmission tronquée comprenant une ou plusieurs sous-porteuses supprimées sur au moins un côté de la transmission.

14. Nœud de réseau (315), comprenant :

un récepteur (1010, 1330) ;
un transmetteur (1010, 1320) ; et
une circuiterie de traitement (1020, 1310) couplée au récepteur et au transmetteur, la circuiterie de traitement étant configurée pour :

déterminer (804) des informations de système destinées à être utilisées par un dispositif sans fil (310) pour déterminer une position d'une porteuse RF dans une bande de fonctionnement par rapport à une partie de canal de synchronisation de la porteuse RF ; et

envoyer (808), par l'intermédiaire du transmetteur, des informations de système déterminées au dispositif sans fil, la position de la porteuse RF dans la bande de fonctionnement n'étant pas centrée à l'intérieur d'un bloc de licence ; et la circuiterie de traitement étant configurée pour recevoir, par l'intermédiaire du récepteur, et/ou transmettre, par l'intermédiaire du transmetteur, une transmission tronquée d'un symbole de multiplexage par répartition orthogonale de la fréquence (MROF), la transmission tronquée comprenant une ou plusieurs sous-porteuses supprimées sur au moins un côté de la transmission.

15. Programme informatique comprenant des instructions qui, lorsqu'elles sont exécutées par un processeur, amènent le processeur à effectuer des actions selon l'une quelconque des revendications 1 à 12.

FIGURE 1

**RF Carrier 210**

Synchronization channel 205

220

200

215A

215B  $F_{SC}$

215C

$\Delta F_{SC,Raster}$

FIGURE 2

EP 3 602 948 B1

FIGURE 3

**RF Carrier 410**

Synchronization channel 405

420

DC

400

415A

415B

415C

$F_{CH}$          $F_{SC}$

$\Delta F_{SC,Raster}$

$\Delta F_{CH,Raster} \times N_{CH,Offs}$

FIGURE 4

EP 3 602 948 B1

Operator license block
500

505A

Emission limit 510

Unwanted emissions from RF carrier 515

$F_{CH}$

515

EP 3 602 948 B1

FIGURE 5

FIGURE 6

700

Start

704 Identify a synchronization channel part of a radio frequency (RF) carrier in an operating band.

708 Obtain system information for use in determining a position of the RF carrier in the operating band relative to the identified synchronization channel part of the RF carrier.

712 Determine, based on the obtained system information, the position of the RF carrier in the operating band relative to the identified synchronization channel part of the RF carrier.

End

FIGURE 7

EP 3 602 948 B1

800

EP 3 602 948 B1

```
                              ┌─────────────┐
                              │    Start    │
                              └─────────────┘
                                     │
                                     ▼
804  ┌──────────────────────────────────────────────────────────────────┐
     │  Determine system information for use by a wireless device to      │
     │  determine a position of an RF carrier in an operating band        │
     │  relative to a synchronization channel part of the RF carrier.     │
     └──────────────────────────────────────────────────────────────────┘
                                     │
                                     ▼
808  ┌──────────────────────────────────────────────────────────────────┐
     │  Send the determined system information to the wireless device.    │
     └──────────────────────────────────────────────────────────────────┘
                                     │
                                     ▼
                              ┌─────────────┐
                              │     End     │
                              └─────────────┘
```

FIGURE 8

FIGURE 9

EP 3 602 948 B1

315

1050

Transceiver
1010

Processing
Circuitry
1020

Network
Interface
1040

Memory
1030

FIGURE 10

EP 3 602 948 B1

EP 3 602 948 B1

**Processing Circuitry**
1120

Network Interface
1140

Memory
1130

330

FIGURE 11

EP 3 602 948 B1

310

Receiving Module — 1230

Communication Module — 1220

Determining Module — 1210

Input Module — 1240

Display Module — 1250

FIGURE 12

EP 3 602 948 B1

315

Determining
Module — 1310

Communication
Module — 1320

Receiving
Module — 1330

FIGURE 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Synchronization signal frequency raster considerations. *3GPP TSG-RAN WG4 RAN4#1-NR, R4-1700187,* 17 January 2016
- **SAMSUNG.** Remaining issues of SS frequency raster. *R1-1702902, 3rd Generation Partnership Project,* 13 February 2017

- **SOFTBANK CORP.** On 200kHz channel raster in NR. *3GPP DRAFT; R4-1702771,* 23 March 2017, vol. RAN WG4